# EUROPEAN PATENT SPECIFICATION

(11) **EP 3 606 355 B1**
(45) Date of publication and mention of the grant of the patent: **28.08.2024**
(21) Application number: 18715948.8
(22) Date of filing: 29.03.2018
(51) Int. Cl.: A23K 10/20, A23K 10/12

(54) **PROCESS FOR CONVERTING INVERTEBRATES INTO FEEDSTOCK**
VERFAHREN ZUR UMWANDLUNG VON WIRBELLOSEN TIEREN IN EINEN ROHSTOFF
PROCÉDÉ DE CONVERSION D'INVERTÉBRÉS EN PRODUIT DE DÉPART

(30) Priority: 07.04.2017 GB 201705675
(43) Date of publication of application: 12.02.2020
(73) Proprietor: Entomics Biosystems Limited, Cambridge, Cambridgeshire CB4 2HY (GB)
(72) Inventor: PIPAN, Miha, Cambridge Cambridgeshire CB4 2HY (GB)
(74) Representative: Russell, Tim
(86) International application number: PCT/GB2018/050892
(87) International publication number: WO 2018/185474

(56) References cited:
- JP-A- 2010 051 186
- RU-C1- 2 576 200
- H.C. KLUNDER ET AL: "Microbiological aspects of processing and storage of edible insects", FOOD CONTROL, vol. 26, no. 2, 1 August 2012 (2012-08-01), pages 628 - 631, XP055125879, ISSN: 0956-7135, DOI: 10.1016/j.foodcont.2012.02.013
- DATABASE WPI Week 201653, 2016 Derwent World Patents Index; AN 2016-33635R, XP002781259
- DATABASE WPI Week 201150, 2011 Derwent World Patents Index; AN 2011-J58023, XP002781260
- G. BOSCH ET AL: "In vitro digestibility and fermentability of selected insects for dog foods", ANIMAL FEED SCIENCE AND TECHNOLOGY, vol. 221, 1 November 2016 (2016-11-01), AMSTERDAM, NL, pages 174 - 184, XP055477208, ISSN: 0377-8401, DOI: 10.1016/j.anifeedsci.2016.08.018
- SARAH MCCUSKER ET AL: "WALTHAM SUPPLEMENT Amino acid content of selected plant, algae and insect species: a search for alternative protein sources for use in pet foods*", JOURNAL OF NUTRITIONAL SCIENCE, 1 January 2014 (2014-01-01), XP055477374, Retrieved from the Internet <URL:https://www.cambridge.org/core/services/aop-cambridge-core/content/view/70BA2CFE172850899577C6FBD3F184C8/S2048679014000330a.pdf/amino_acid_content_of_selected_plant_algae_and_insect_species_a_search_for_alternative_protein_sources_for_use_in_pet_foods.pdf> [retrieved on 20180522], DOI: 10.1017/jns.2014.33

## Description

### Field of Invention

The invention relates to the field of obtaining feedstock or feedstocks from invertebrates. In particular, the invention relates to a process for converting invertebrates into a feedstock or feedstocks using microbial fermentation, and extends to products of the process.

### Background

The use of invertebrates as an animal food source, and to convert waste organic biomass into invertebrate biomass is known. It is also known to process invertebrates for the purpose of nutrient transformation and/or extraction.

Klunder, H.C., Wolkers-Rooijackers, J.,, Korpela, J.M., and Nout M.J.R, (2012) in Microbiological aspects of processing and storage of edible insects, Food Control, 26 (2), p. 628-631 describe an exploratory evaluation of the microbiological content of fresh, processed and stored edible insects, with focus on farmed mealworm larvae (Tenebrio molitor) and house crickets (Acheta domesticus). A short heating step was sufficient to eliminate Enterobacteriaceae, however some sporeforming bacteria will survive in cooked insects. Simple preservation methods such as drying/acidifying without use of a refrigerator were tested and considered promising. Lactic fermentation of composite flour/water mixtures containing 10, or 20% powdered roasted mealworm larvae resulted in successful acidification and was demonstrated effective in safeguarding shelf-life and safety by the control of Enterobacteria and bacterial spores.

CN 105 533 136 A discloses a preparation method of novel fermented feed and worm enzyme. The preparation method comprises the following steps: sticking metabolic products of fly maggots; grafting the metabolic products onto solid culture medium to carry on culturing; picking and transferring the bacterial colonies into liquid culture medium to carry on amplified culturing, so that a bacterial liquid is obtained; taking fly-maggot protein powder, bean meal and crude feed as principle raw materials to make a bottom material for fermentation; crushing the bottom material for fermentation; uniformly mixing the bacterial liquid with water; spraying the mixture onto the bottom material for fermentation and then carrying out uniform blending; sending the bottom material for fermentation into a fermentation tank, evenly laying the bottom material in the fermentation tank and then standing for fermentation; and finally, packing the product in sealed packages. According to the preparation method, the bottom material for fermentation is treated by the microbial populations contained in the metabolic products of the fly maggots; due to the homology between the fly-maggot powder and the microbial, the fermentation effect can be intensified, so that the various beneficial biologically active ingredients in the fermented product can be better and more effectively accumulated.

RU 2 576 200 C1 discloses a method comprising mixing 1 part by weight of biomass larvae *Hermetia illucens,* grown on wheat grain and pre-washed with tap water, with a protein content in the biomass at least 36 wt.%, with 1 part by mass of probiotic crude product of solid phase fermentation strain Bacillus subtilis VKPM B-8130 on a sterile medium. Latter is a beet pulp, impregnated with nutrient medium containing molasses, potassium phosphate dibasic, magnesium sulfate, yeast autolysate and water to a moisture content of not more than 35%. Resulting mixture was homogenized to a particle size of 1-2 mm and a combination process is performed by solid phase fermentation-drying at a temperature of the heating agent is not higher than 55°C to achieve a final moisture content of not more than 10 wt.%, number of viable cells of Bacillus subtilis VKPM B-8130 of at least 10CFU/g.EFFECT: realization of invention provides increased productivity and safety of livestock and birds, animals zootechnical performance by increasing the digestibility of forage, stimulation of metabolic and immune processes.

CN 102 100 302 A discloses a preparation method of a fermentation cake and maggot protein feed, and the method comprises the following steps: 1) smashing subsidiary agricultural product cakes serving as raw materials; 2) adding bran and bacillus subtilis into the smashed raw materials and uniformly mixing; 3) adding water in the product obtained in the step 2) and concocting to obtain a fermentation medium; 4) fermenting the fermentation medium and engineering fly eggs in a fermentation reactor; and 5) separating the product through fermentation in the step 4) and extracting the maggot larvae to obtain a ferment; and sequentially and respectively drying and smashing the maggot larvae and the ferment to obtain maggot protein and fermentation protein feed respectively. The maggot protein and fermentation protein feed prepared by the method have the characteristics of high protein content, nutritive equilibrium and the like.

JP 2010 051186 A discloses a method for using *Aspergillus oryzae* to improve the insect smell, oil-and-fat oxidization smell of silkworm pupas, to provide a pet food, feed, or seasoning using the silkworm pupa mold and having good palatability, and to provide a method for producing the same. Silkworm pupas or their mixture with grains as raw materials are inoculated with *Aspergillus oryzae* and subjected to a solid fermentation to produce the silkworm pupa malt improved in the insect smell, oil-and-fat oxidization smell. In addition, the high enzymatic actions, such as protease activity, of the silkworm pupa malt are utilized to produce degraded silkworm pupa proteins.

### Summary

In accordance with a first aspect of the invention, there is provided a process for converting invertebrates into a feedstock(s) comprising:
(a) perforating and/or extracting the invertebrates;
(b) separating the solid invertebrate component from the liquid invertebrate component;
(c) optionally separating the liquid invertebrate component into lipid and non-lipid fractions;
(d) creating one or more growth media, wherein the growth media comprise or consist of the solid invertebrate component and, optionally, one or more additives; the liquid invertebrate component or a fraction thereof and, optionally, one or more additives; or the solid and liquid invertebrate component and, optionally, one or more additives;
(e) subjecting one or more of the growth media to microbial fermentation;
(f) inhibiting or terminating microbial fermentation;
wherein microbial fermentation is carried out as a two or more step process. Each fermentation step comprises a different microbe(s) and/or condition(s) and/or growth media.

In some embodiments, the method further comprises a step of one or more of washing, culling and pasteurising the invertebrates prior to perforating and/or extracting the invertebrates.

In some embodiments, microbial fermentation is carried out using one or more members of the bacteria, fungi and archea kingdoms.

In some embodiments, microbial fermentation is carried out using one or more members of the Lactobacilliales, Bacilliales, Bifidobacteriales, Rhodospirillales Saccharomycetales or Eurotiales orders.

In some embodiments, microbial fermentation is carried out using one or more of Bacillus subtilis, Bacillus subtilis var. natto, Lactobacillus plantarum, Lactobacillus acidophilus, Lactobacillus helveticus, Lactobacillus casei, Streptococcus thermopilus, Bifidobacterium bifidum, Saccharomyces cerevisiae, Yarrowia lipolytica, Phaffia rhodozyma, Candida utilis or Aspergillus oryzae.

In some embodiments, the liquid invertebrate component is separated into lipid and non-lipid fractions.

In some embodiments, a growth medium comprising or consisting of the liquid invertebrate component and, optionally, one or more additives; or the non-lipid fraction of the liquid component and, optionally, one or more additives is subjected to a first fermentation step, followed by a second fermentation step.

In some embodiments, a first fermentation step is carried out using a growth medium comprising or consisting of the solid invertebrate component and, optionally, one or more additives; and a second fermentation step is carried out using a growth medium comprising or consisting of the liquid invertebrate component and, optionally, one or more additives or the non-lipid fraction of the liquid invertebrate component and, optionally, one or more additives.

In some embodiments, the fermentation mixture(s) is separated into lipid and non-lipid fractions.

In some embodiments one or more of the solid invertebrate component, the lipid fraction of the liquid invertebrate component, the fermented solid invertebrate component or the fermented lipid fraction of the liquid invertebrate component are removed from the process. In some such embodiments, the removed fermented solid invertebrate component is washed and filtered, and in some embodiments, the filtrate is returned to the process for use as or addition to a growth medium for use in microbial fermentation.

In some embodiments, the first and second fermentation mixtures or one or more fractions thereof may be combined, and the resultant mixture subjected to one or more fermentations step.

In some embodiments, a final fermentation step is carried out using acid producing microbial species. In some such embodiments, the final fermentation step is carried out using Acetobacter or Lactobacillus species.

In some embodiments, one or more additives are added to the fermentation mixture prior to the second and/or each subsequent fermentation step.

In some embodiments the invertebrates are larvae, prepupae or pupae.

In some embodiments the invertebrates are members of the Ectodysozoa or ophotrochozoa superphyla. In some embodiments the invertebrates are Hermetia illucens.

In accordance with a second aspect of the invention, there is provided a composition obtained from the process according to the first aspect of the invention.

### Brief Description of the Drawings

Embodiments of the invention will now be described, by way of example only, with reference to the accompanying drawings, in which:

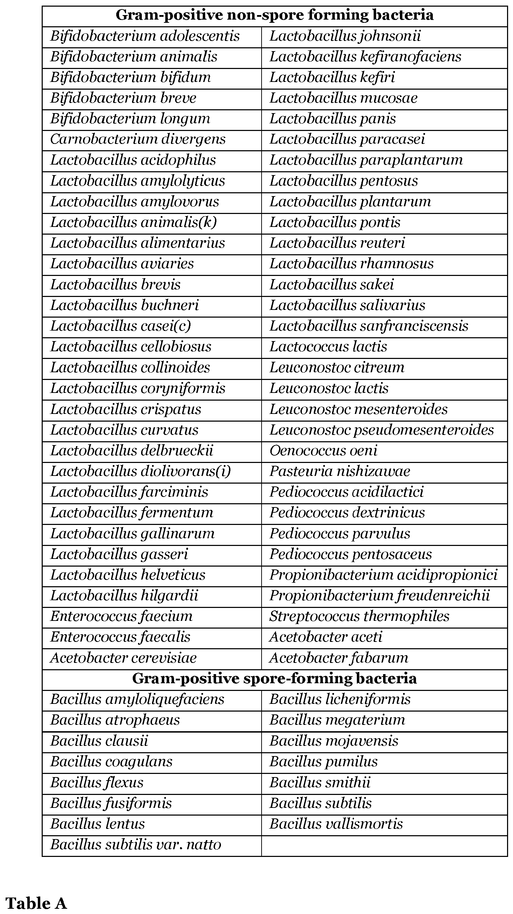

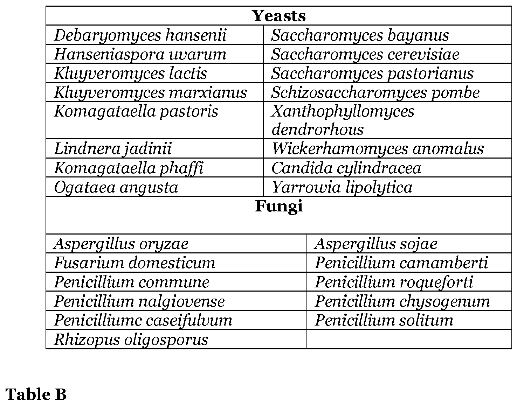

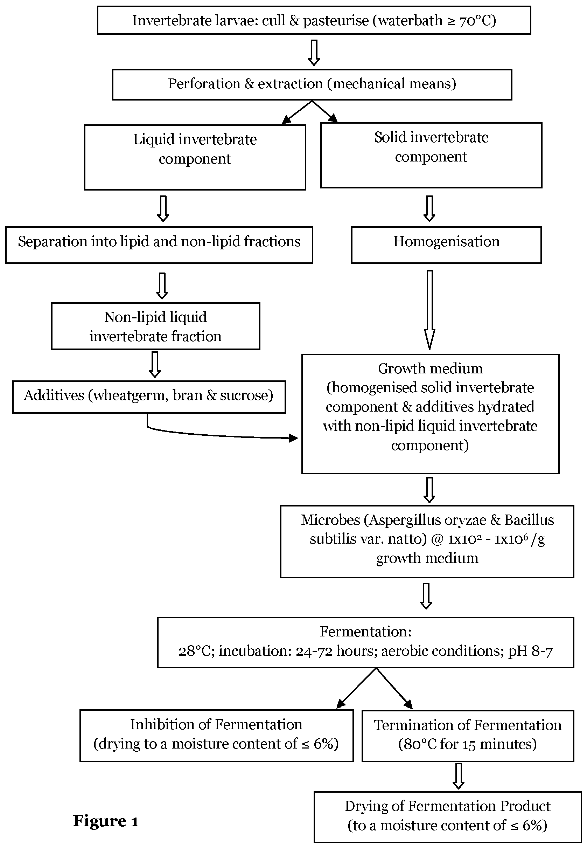

Figure 1 is a flow-chart demonstrating a process according to the invention involving a one-stage fermentation process wherein the growth medium comprises the solid invertebrate component, the non-lipid liquid invertebrate component and additives;

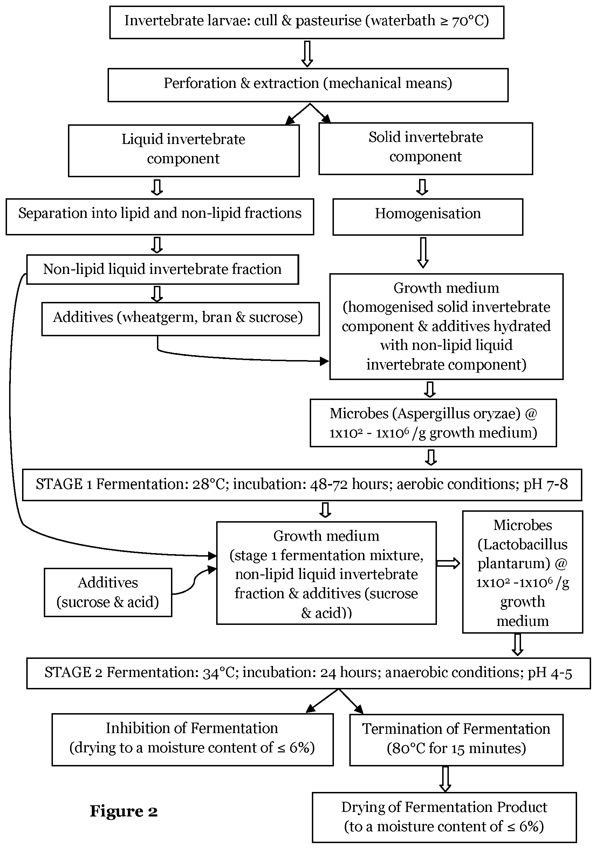

Figure 2 is a flow-chart demonstrating a process according to the invention involving a two-stage fermentation process wherein a first fermentation step and a second fermentation step are carried out sequentially: a first fermentation step is carried out using a growth medium comprising the non-lipid liquid invertebrate component and the solid invertebrate component; followed by a second fermentation step using a growth medium comprising the fermentation mixture from the first fermentation step, the non-lipid fraction of the liquid invertebrate component and additives;

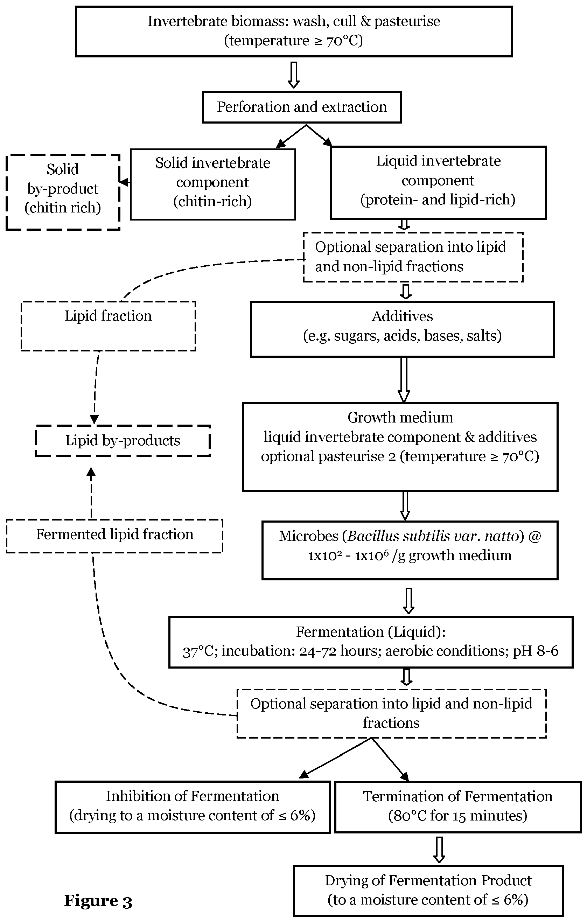

Figure 3 is a flow-chart demonstrating a process according to the invention involving a one-stage fermentation process wherein the growth medium comprises the liquid invertebrate component or the non-lipid fraction of the lipid component and additives;

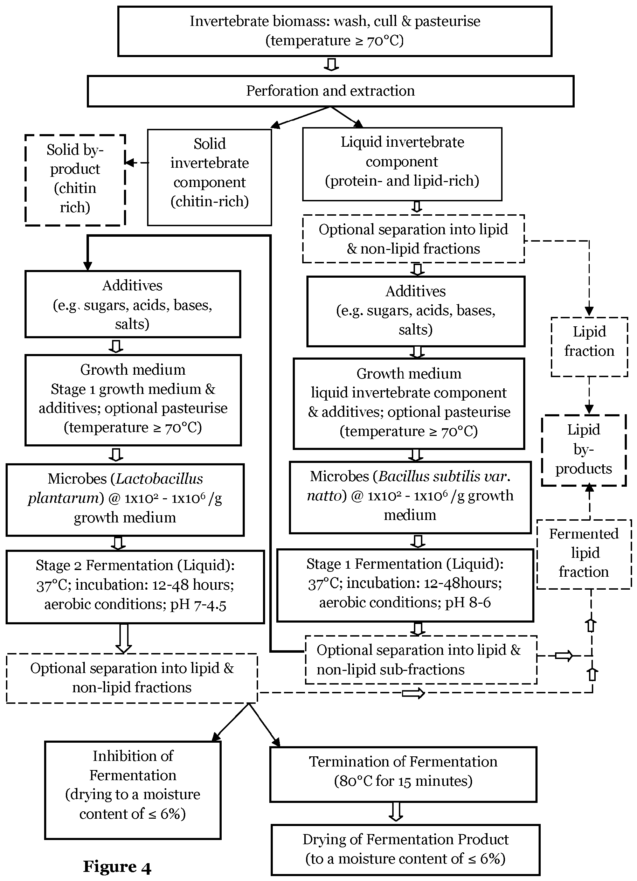

Figure 4 is a flow-chart demonstrating a process according to the invention involving a two-stage fermentation process, wherein a first and second fermentation step are carried out sequentially: a first fermentation step is carried out using a growth medium comprising the liquid invertebrate component or the non-lipid fraction of the lipid component and additives, followed by a second fermentation step using a growth medium comprising the fermentation mixture from the first fermentation step, or the non-lipid fraction of the fermentation mixture from the first fermentation step and additives;

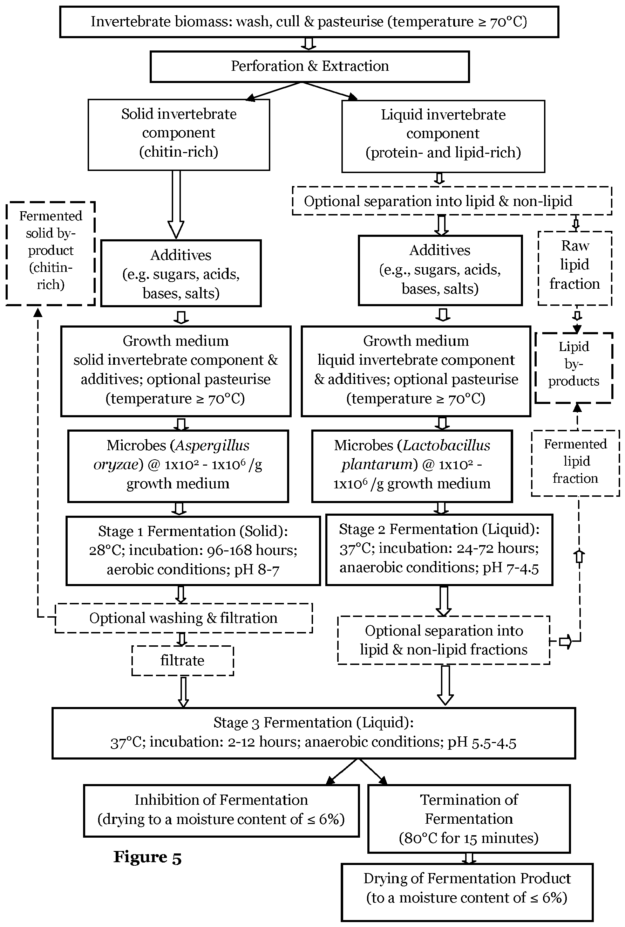

Figure 5 is a flow-chart demonstrating a process according to the invention involving a three-stage fermentation process wherein a first and second fermentation step are carried out in parallel: a first fermentation step is carried out using a growth medium comprising the liquid invertebrate component or the non-lipid fraction of the liquid component and additives; and a second fermentation step is carried out using a growth medium comprising the solid invertebrate component and additives. The first and second fermentation mixtures and/or one or more fractions thereof (for example the fermented non-lipid fraction of the liquid fermentation mixture; and/or the filtrate resulting from washing and filtering of the solid fermentation mixture) are then combined, and the resultant mixture subjected to a third fermentation step.

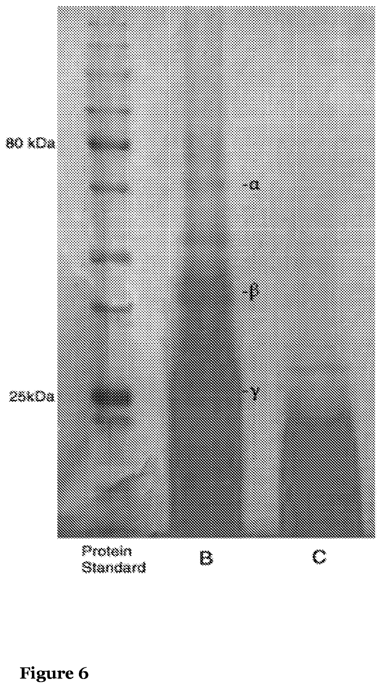

Figure 6 is an SDS-PAGE result demonstrating partial protein hydrolysis of a growth medium prepared according to the present invention and subjected to microbial fermentation according to the present invention.

### Detailed Description

The Food and Agriculture Organization of the United Nations estimates that to feed the world's population in 2050, 70% more food will need to be produced over the same time period. To meet this need requires a new approach in the agricultural sector, and challenges include addressing the issue of waste food; and ensuring sufficient and sustainable sources of protein-rich animal feed.

There is also interest in adding compositions to animal feed which are considered to aid digestion and/or health, such as probiotics, which are thought to improve the microbiome of the animal, for example by producing secondary metabolites or outcompeting potentially pathogenic gut flora. WO2010/033714 discloses the provision of a composition comprising Bacillus subtilis. However, such compositions have no or little calorific value, can be expensive, and it can be time consuming to add them to drinking water or feedstocks.

It has now been discovered that the microbial fermentation of an invertebrate substrate under particular conditions can result in an animal feedstock which has one or more of an enhanced nutritional, chemical, biological, anti-oxidant, immunogenic and/or probiotic profile.

By 'feedstock' is meant an animal food or component of an animal food.

Accordingly, in a first aspect of the present invention there is provided a process for converting invertebrates into a feedstock or feedstocks comprising perforating and/or extracting the invertebrates; separating the solid invertebrate component from the liquid invertebrate component; optionally separating the liquid invertebrate component into lipid and non-lipid fractions; creating one or more growth media, wherein the growth media comprise or consist of the solid invertebrate component and, optionally, one or more additives; the liquid invertebrate component or a fraction thereof and, optionally, one or more additives; or the solid and liquid invertebrate component and, optionally, one or more additives; subjecting one or more of the growth media to microbial fermentation; inhibiting or terminating microbial fermentation; wherein microbial fermentation is carried out as a two or more step process. Each fermentation step comprises a different microbe(s) and/or condition(s) and/or growth media.

In some embodiments, invertebrates are selected which have potential for use in industrial processes. For example, invertebrates may be selected for their ease of use in an industrial process and/or their ability to convert waste, such as waste food, into biomass over a short period of time.

In some embodiments, invertebrates may be selected which synthesize or express particular biological material. For example, members of the Ecdysozoa clade typically synthesize lipids internally, and/or have a cuticle or exoskeleton composed of chitin.

There is also interest in adding compositions to animal feed which are considered to aid digestion and/or health, such as probiotics, which are thought to improve the microbiome of the animal, for example by producing secondary metabolites or outcompeting potentially pathogenic gut flora. WO2010/033714 discloses the provision of a composition comprising Bacillus subtilis. However, such compositions have no or little calorific value, can be expensive, and it can be time consuming to add them to drinking water or feedstocks.

It has now been discovered that the microbial fermentation of an invertebrate substrate under particular conditions can result in an animal feedstock which has one or more of an enhanced nutritional, chemical, biological, anti-oxidant, immunogenic and/or probiotic profile.

By 'feedstock' is meant an animal food or component of an animal food.

Accordingly, in a first aspect of the present invention there is provided a process for converting invertebrates into a feedstock or feedstocks comprising perforating and/or extracting the invertebrates; separating the solid invertebrate component from the liquid invertebrate component; optionally separating the liquid invertebrate component into lipid and non-lipid fractions; creating one or more growth media, wherein the growth media comprise or consist of the solid invertebrate component and, optionally, one or more additives; the liquid invertebrate component or a fraction thereof and, optionally, one or more additives; or the solid and liquid invertebrate component and, optionally, one or more additives; subjecting one or more of the growth media to microbial fermentation; inhibiting or terminating microbial fermentation; wherein microbial fermentation is carried out as a two or more step process.

In some embodiments, invertebrates are selected which have potential for use in industrial processes. For example, invertebrates may be selected for their ease of use in an industrial process and/or their ability to convert waste, such as waste food, into biomass over a short period of time.

In some embodiments, invertebrates may be selected which synthesize or express particular biological material. For example, members of the Ecdysozoa clade typically synthesize lipids internally, and/or have a cuticle or exoskeleton composed of chitin.

In some embodiments, the invertebrates are members of the Ecdysozoa or Lophotrochozoa superphyla. In some embodiments, the invertebrates are arthropods or annelids. In preferred embodiments, the invertebrates are arthropods. In preferred embodiments, the invertebrates are members of the Hexapoda subphylum. In some preferred embodiments, the invertebrates are one or more of Hermetia illucens, Tenebrio molitor, Galleria mellonella, Alphitobius diaperinus, Zophobas morio, Blaberus fusca, Blaptica dubia, Musca domestica, Chrysomya megacephala, Locusta migratoria, Schistocerca gregaria, Acheta domesticus or Samia ricini.

The terms "invertebrates", "Ecdysozoa", "Lophotrochozoa", "arthropods" "annelids" and "Hexapoda" encompass the organisms within these classifications in any developmental stage, such as adults, larvae, prepupae or pupae.

In preferred embodiments, the invertebrates are larvae prepupae and/or pupae. In more preferred embodiments, the invertebrates are black soldier fly (Hermetia illucens) larvae, prepupae and/or pupae.

### Growing

In some embodiments, the invertebrates are provided with a temperature and atmosphere controlled environment. Such an environment can aid optimal growth and reproduction. In some embodiments, adult invertebrates are provided with a suitable environment for laying eggs, and for the eggs to hatch and, in some embodiments, pupate. In some embodiments, the invertebrates are provided with a food substrate. In some embodiments, the food substrate is edible organic waste. In such some embodiments, the waste is agricultural and/or food waste. As an example, adult house crickets may be provided with a temperature and atmosphere controlled environment and /or a food substrate and/or a suitable environment for laying eggs, and for the eggs to hatch. As an alternative example, adult black soldier flies may be provided with a temperature and atmosphere controlled environment and/or a suitable environment for laying eggs, and for the eggs to hatch and pupate. The resultant larvae may be provided with a temperature and atmosphere controlled environment and/or a food substrate such as agricultural waste.

### Harvesting

The invertebrates may be harvested at an appropriate stage of development. For example, at a stage where one or more of the lipid, protein or chitin component of the invertebrates is optimal. In some embodiments, this may be the pre-pupal or pupal stage. In some embodiment harvesting may occur in the fifth or sixth instar stage. Any suitable method for harvesting may be used, for example self-harvesting; or separation from the pupation substrate via a suitable method, such as sieving.

In some embodiments, the invertebrates are grown and harvested in a continual manner, for example, only a proportion of the larvae may be harvested, in order to leave a sufficient number to develop into adults, mate and lay eggs, thereby perpetuating the system.

### Processing: Culling and/or Washing

In some embodiments, the harvested invertebrates are culled, such as by freezing, e.g. immersion in a freezing water bath. In some embodiments, the invertebrates are washed in an aqueous solution, to remove detritus and superficial contaminants. The aqueous solution may be applied to the invertebrates as a bath. In some embodiments the aqueous solution is water, or an aqueous saline solution, or weak disinfecting solution, such as 0.1-1% NaClO. The aqueous solution may have a temperature or be held at a temperature from about -4°C to about 100°C. Application or use of a cold solution (for example less than 8°C) can be used to both cull and wash the invertebrates simultaneously. Use of a solution having or held at higher temperatures (for example at least 70°C) can assist with pasteurisation or partial pasteurisation of the invertebrates.

In some embodiments, the invertebrates are subjected to a treatment to facilitate subsequent extraction. Any suitable means for mobilising the lipid and/or protein content of the invertebrate may be used, for example ultrasonication, high pressure treatments or pulsed electric field processing. The treatment may be carried out subsequent to or simultaneously with the culling and/or washing stage.

In some embodiments the invertebrates are then heated. This may be achieved using any suitable means, for example, use of a steam oven or pasteurisation oven, with the invertebrates passing through the oven on a conveyor belt; use of an autoclave or alternative high pressure technologies; or use of a heated water bath. The temperature and length of heating depends upon the desired outcome. Heating of the invertebrates can aid liquification of internal fats, thereby aiding their subsequent extraction.

Heating of the invertebrates can also inhibit or prevent oxidation of one or more components of the invertebrates during subsequent processing. In some preferred embodiments, heating can be used to pasteurise or sterilise the invertebrates, which can be beneficial as this prevents or reduces microbial contamination and/or reduces oxidation of the invertebrates or invertebrate components during subsequent processes and/or fermentation. In some embodiments, the invertebrates are heated to a core temperature of at least 75°C. In preferred embodiments, the invertebrates are heated to a core temperature of at least 95°C.

In alternative embodiments, pasteurisation or sterilisation of the invertebrates is achieved using other suitable means, such as irradiation with ultraviolet light and/or gamma rays, or use of food processing high pressure technology.

In some embodiments wherein the harvested invertebrates are pasteurised or sterilised, all subsequent stages of the process are carried out in a clean, food-grade or sterile environment and/or under clean, food-grade or sterile conditions.

### Processing: Perforation and/or Extraction

In some embodiments, the invertebrates undergo a perforation and/or extraction step. In some embodiments, perforation and/or extraction assists with or achieves separation of the liquid component of the invertebrates from the solid component of the invertebrates.

Perforation involves rupturing of the external surface or exoskeleton of the invertebrate, and assists with extraction of the liquid component of the invertebrates. Perforation can be achieved using suitable perforation equipment for example, a pin tool (for example as available from Perforation Machinery Ltd. (http://www.perforationmachinery.com)), or moving blades that score the invertebrates. In some embodiments, each invertebrate receives at least one perforation.

Extraction involves expulsion of the liquid component of the invertebrates, and may be achieved by any suitable mechanical means, such as a hydraulic press or roller press. Alternatively, extraction can be achieved via suitable non-mechanical means, for example, use of supercritical CO₂, or methods involving hexane extraction.

In some preferred embodiments, perforation and extraction occurs as a single step. In some embodiments, the means of extracting the invertebrates also achieves perforation of the invertebrates (and *vice versa).* Combined perforation and extraction may be achieved using any suitable means. For example using a means of squashing or squeezing the invertebrates to achieve rupture of the exoskeleton and expulsion of the contents. In some embodiments, the means used for perforation and extraction of the invertebrates achieves a high level of separation of the liquid component of the invertebrates from the solid component of the invertebrates. In some embodiments, the means used for perforation and extraction of the invertebrates separates at least around 40, 45, 50, 55, 60, 65 or 70% of the liquid component of the invertebrates from the solid component of the invertebrates. In some embodiments, the means used for perforation and extraction of the invertebrates separates around 80, 85, 90, 95 or 98% of the liquid component of the invertebrates from the solid component of the invertebrates. In some embodiments, combined perforation and extraction is achieved using a press, for example a hydraulic press.

In some embodiments, perforation and/or extraction are carried out whilst the invertebrates are still warm from the heating step, as this minimises or avoids solidification of the liquid component. In some embodiments, the core temperature of the invertebrates is maintained during perforation and/or extraction at above around 35°C. In preferred embodiments, the core temperature of the invertebrates is maintained during perforation and/or extraction at above 50°C.

In some embodiments, perforation and/or extraction is useful for invertebrates which comprise a significant fat content and/or a significant chitin content. For example, black soldier fly larvae or mealworms. For some lower fat and/or chitin content invertebrates (such as crickets) perforation and/or extraction may be optional.

In some embodiments the extracted liquid component of the invertebrates is separated from the solid invertebrate component and collected.

The solid component typically comprises the chitinous exoskeleton of the invertebrate, and any residual protein and/or oil that has not been extracted. In some embodiments, the residual protein and/or oil content is less than about 30% of the solid component. In preferred embodiments, the residual protein and/or oil content is less than about 15% of the solid component. In some embodiments, the residual oil content is less than about 20% of the solid component. In preferred embodiments, the residual oil content is less than about 10% of the solid component.

In some embodiments, the solid component is then homogenized using any suitable means, for example a homogenizer, blender or cutter mill. In some embodiments, homogenisation results in the solid component having a particulate size of less than around 20 mm, less than around 15 mm, less than around 10 mm, less than around 5 mm, less than around 3 mm, less than around 2 mm or less than around 1 mm.

In some embodiments, the solid component is removed from the process, for example for use in alternative processes. This can be beneficial as fermentation microbes tend to perform less optimally on substrates comprising a high chitin content. In some such embodiments, the removed solid component may be further processed, for example by thermo-mechanical means such as pasteurisation, sterilisation, boiling or drying; by further particle size reduction; or by chemical means such as enzymatic, acid or base hydrolysis.

The liquid invertebrate component typically comprises haemolymph, oils and residual chitin. 'Haemolymph' is a term known in the art which refers to the fluid that circulates in the interior of the invertebrate body. It typically comprises fluid plasma, proteins, haemocytes, amino acids, inorganic salts and metabolic end products.

In some embodiments, the liquid component is separated into fractions. In some embodiments, the liquid component is separated into lipid and non-lipid fractions. This may be done by any suitable means, for example by the use of gravity and/or temperature, such as the use of a centrifuge; or temperature-assisted gravitational separation, for example the liquid component may be refrigerated until it has settled into fractions which can then be separated (the lipid fraction will typically solidify whilst the non-lipid fraction remains a liquid, allowing it to be removed). The non-lipid fraction of the liquid component typically comprises haemolymph and residual chitin.

In some embodiments where the invertebrates are high in fat (above around 10% fat (dry matter weight); for example, black soldier fly larvae) separating the liquid component into fractions can be challenging due to the high probability of fat emulsification during perforation and/or extraction. In some such embodiments, separation of the liquid invertebrate component into fractions can be carried out following one or more of the fermentation steps, when, typically, separation is easier due to partial hydrolysis of the non-lipid fraction of the liquid component.

In some embodiments, one or more fractions of the liquid component are concentrated and/or dried. In some embodiments, the non-lipid fraction of the liquid component is concentrated and/or dried. In some embodiments, the lipid fraction of the liquid invertebrate component may be removed for use in alternative processes, and this can be beneficial as fermentation microbes tend to perform less optimally on fat substrates.

In some embodiments, one or more fractions of the liquid invertebrate component may be added back into the solid invertebrate component; or the solid invertebrate component may be added to one or more fractions of the liquid invertebrate component. In some embodiments, the non-lipid fraction of the liquid component is added back to the solid component or the solid invertebrate component is added to the non-lipid fraction of the liquid component.

One or more of the invertebrate components may then be used in the fermentation process.

### Fermentation

'Fermentation' as referred to herein means the microbial transformation of a growth medium.

The growth medium comprises or consists of the invertebrate substrate and, optionally, one or more additives.

By "invertebrate substrate" is meant one or more of the products resulting from any of the processing steps set out above. For example, the invertebrate substrate can comprise or consist of: harvested invertebrates; harvested and culled invertebrates; harvested, culled and washed invertebrates; harvested, culled and washed invertebrates which have further been subjected to one or more of a pasteurisation step, perforation and/or an extraction step; the solid invertebrate component; the liquid invertebrate component; one or more fractions of the liquid invertebrate component; or any combination thereof.

In some embodiments, the invertebrate substrate comprises or consists of the solid invertebrate component, the lipid invertebrate component, or the non-lipid liquid invertebrate component or a combination thereof. In some embodiments, the invertebrate substrate comprises or consists of the pasteurised solid invertebrate component, the pasteurised liquid invertebrate component, or the pasteurised non-lipid liquid invertebrate component or a combination thereof. In some preferred embodiments, the invertebrate substrate comprises or consists of the liquid invertebrate component. In some preferred embodiments, the invertebrate substrate comprises or consists of the pasteurised liquid invertebrate component.

In some embodiments, the invertebrate substrate comprises or consists of different invertebrate components in certain ratios. For example, a certain amount of the solid invertebrate component may be added to a certain amount of the liquid invertebrate component, or non-lipid fraction of the liquid component or vice versa. In some embodiments, a certain amount of the solid invertebrate component may be added to an invertebrate substrate largely composed of the liquid invertebrate component, or the non-lipid fraction of the liquid component. In some embodiments the invertebrate substrate comprises solid: liquid or non-lipid fraction of the invertebrate component in a ratio of between about 0.1%:99.9% (solid component: liquid or non-lipid fraction of the liquid invertebrate component) and 5%:95% (solid component: liquid or non-lipid fraction of the liquid component); or between about 2.5%:97.5% solid component: liquid or non-lipid fraction of the liquid invertebrate component and 1%:99% solid component: liquid or non-lipid fraction of the liquid invertebrate component.

### Additives

In some embodiments, the growth medium further comprises one or more additives. Additives may be used which are considered or have been certified not to represent a health or safety threat to humans, animals and/or the environment.

Additives may be selected for a particular purpose, or to achieve a particular outcome or product. For example, additives may be selected which drive fermentation in a particular direction. For example, an additive comprising one or more simple sugars (for example sucrose, glucose and/or molasses) may be added to an invertebrate substrate to which Lactobacillus is to be added, in order to aid rapid initiation of lactic acid production by serving as a source of nutrition for the Lactobacillus. Alternatively or in addition, additives may be selected for the purpose of optimising the fermentation process and/or tailoring the resultant product(s), for example in terms of the product's nutritional value or additional benefits. For example, some invertebrate substrates are poor in carbohydrates, particularly carbohydrates which constitute preferred microbial fermentation substrates, such as starches or sugars. Addition of a carbohydrate-rich additive can enhance fermentation: the carbohydrate-rich additive can act as a nutrient source for the microbes; can constitute a preferred substrate for microbial fermentation; can stimulate microbial production of carbohydrate-lysing enzymes such as amylase; and/or can comprise protein, and thus act as an additional source of protein in the growth medium/final product (e.g. wheatgerm). In some embodiments, the additives may be one or more simple sugars (for example, sucrose, glucose, molasses); and/or one or more sources of complex carbohydrate (for example bran, cereal fines, rice husks or wheatgerm).

In some embodiments, additives are selected which may enhance the fermentation process, for example, vitamins, such as B-vitamins. In some embodiments, the additives can provide a source of one or more components of a rate limited microbial hydrolysis reaction. In some embodiments, the additives may comprise chemical inducers which exert expression of transgenic loci in genetically modified microbes included in the growth medium.

Additives may be added to the invertebrate substrate at between around 5% to around 85% by weight of the invertebrate substrate. In some embodiments, additives are added to the invertebrate substrate at around 5%, around 7.5%, around 10%, around 15%, around 20%, around 25%, around 30%, around 40% around 45%, around 50%, around 55% around 60%, around 65%, around 70% around 75% or around 80% by weight of the invertebrate substrate.

In some embodiments, one or more of the additives are hydrated. In some embodiments, the additives are hydrated to around 10-80% v/w; around 20-80% v/w; around 30-75% v/w; around 40-75% v/w; preferably around 50-70% v/w and more preferably around 50% v/w overall hydration level. For example, addition of 10 mL fluid to 10g dry additive will yield a 50% hydrated additive. Hydration may be achieved using water and/or nutrient solutions such as the liquid invertebrate component or the non-lipid fraction of the liquid invertebrate component.

In some embodiments hydration is achieved using the non-lipid fraction of the liquid invertebrate component; in some preferred embodiments hydration is achieved using the liquid invertebrate component. Use of the liquid invertebrate component or the non-lipid fraction thereof can be beneficial as it can reduce the need to remove water from a resultant final product which desirably has a low or minimal moisture content.

In some embodiments, the liquid used for hydration is pasteurised or sterile. In some embodiments, the additives are pasteurised or sterile. In preferred embodiments, the liquid used for hydration and the additives are pasteurised or sterile. Additives may be obtained from commercial sources in pre-sterilised form, or sterilised by any suitable means, for example by steam oven or autoclave.

The growth medium may be mixed using any suitable means.

### pH

In some embodiments, the pH of the growth medium is established. Typically, the pH of a growth medium comprising an invertebrate substrate, for example an insect substrate comprising one or more components of black soldier fly larvae, is mildly alkaline (for example, 7.6-8.3).

The pH of the growth medium can affect the fermentation process: some microbes function better under alkaline conditions, while some microbes function better under acid conditions. For example, mildly alkaline conditions (for example 7.5-8.9) are preferable for fermentation using Bacillus species such as Bacillus subtilis var. natto. In contrast, acidic conditions (5.5- 6.9) have been shown to stimulate lactic acid fermentation using Lactobacillus species, such as Lactobacillus plantarum. Further to this, some microbes produce different enzymes under different conditions of acidity/alkalinity, for example, Aspergillus oryzae functions well in both acidic and alkaline conditions, but produces different proteases under different pH conditions (Salihi, A. et al. Int. J. Biological Macromolecules. (2017).94(B): 827-835; De Castro, Ruann J.S and Sato, Helia, H; J. Food Processing. (2014). Article ID:372352 (http://dx.doi.org/10.1155/2014/372352).

In some embodiments, the pH of the growth medium is modified. In some embodiments, the pH of the growth medium is modified in accordance with the microbe to be added and/or in accordance with the desired outcome of the fermentation process. For example, for fermentation using a Bacillus species such as Bacillus subtilis var. natto, the pH of the growth medium may be adjusted to around 7.5 to around 8.9; for fermentation using a Lactobacillus species, such as Lactobacillus plantarum, pH may be adjusted to around 5.5 to around 6.9. pH may be adjusted by the addition of any suitable alkali and/or acid, for example food-grade acids such as acetic acid, lactic acid or citric acid.

### Microbes

Microbes are added to the growth medium. Any suitable microbes for achieving the desired fermentation outcome may be used, and any number of microbes may be used for any fermentation step, for example, a single microbe may be used for any single fermentation step; or more than one microbe (for example a co-culture) may be used for any single fermentation step. The microbe(s) added to the growth medium may be selected for their ability to achieve a particular outcome or product. For example, addition of Bacillus subtilis var. natto typically leads to production of polyglutamic acid (PGA). PGA can be used as a flocculant and/or hydro-gel-forming material in animal feeds, and has been shown to aid nutrient absorption in animals (Ho, G-H. et al., J. Chinese Chem. Soc. 2006. 53:1363-1384). As a further example, addition of Lactobacilliales species typically acidifies the product resulting from fermentation through production of organic acids (lactic acid), which can inhibit pathogen growth within the product and reduce decomposition and spoilage, thus promoting product shelf-life.

In addition or alternatively, microbes can be selected for addition to the growth medium which give rise to enzymes which can enhance the nutritional content of the resultant product and/or create fermentation conditions which result in the presence of nutrients and/or acids which can enhance the nutritional content of the resultant product. For example, certain enzymes or acids derived from particular microbes can enhance feed conversion rates of animal feed into which the product resulting from fermentation is incorporated, by rendering nutrients within the feed more easily accessible and digestible. As an example, Aspergillus species, and in particular Aspergillus oryzae, produce digestive enzymes such as proteases, phytase, chitinase and amylase, as well as metabolites such as citric acid. As a further example, Saccharomyces species are capable of synthesising B vitamins.

Wild-type, genetically modified (GM) and/or recombinant microbial strains may be used. In embodiments where GM microbes are used, GM microbes can be selected which offer one or more benefits over wild-type microbes, or overcome one or more disadvantages associated with wild-type. For example, microbes could be used which have a genome altered to produce high-value nutrients, for example, omega-3 fatty acids, such as eicosapentaenoic acid (EPA) or docosahexamoic acid (DHA) (Amiri-Jamie et al. Appl Microbiol Biotechnol. 2014.98(7):3071-80). Microbes with a certain property could be enhanced by modification of their genome to achieve secretion of an additional enzyme. For example, Lactobacillus species which, as discussed above, typically acidify the fermentation product, could be enhanced by modification of their genome to achieve secretion of one or more acidic exoproteases. Such GM microbes could, therefore, carry out the function of multiple organisms, and thus reduce the number of microbes required to be added to the growth medium.

Microbes may be used which are considered or have been certified not to represent a health or safety threat to humans, animals and/or the environment (for example microbes certified as Generally Recognised As Safe (GRAS), such as microbes certified as Generally Recognised As Safe (GRAS) under FDA rules; or Qualified Presumption of Safety (QPS) under EFSA rules); and/or are considered to provide or produce a beneficial effect on or to humans, animals or the environment.

Microbes may be obtained from commercial sources and/or isolated and characterised de novo. Microbes may be cultivated on any suitable media, for example defined microbiological growth media, such as Luria broth (LB); de Man, Rogosa and Sharpe medium (MRS); or yeast extract peptone dextrose medium (YPD).

In some embodiments, the microbes are members of one or more of the bacteria, fungi and archea kingdoms.

In some embodiments, the microbes are bacteria. In some embodiments the microbes are one or more members of Lactobacilliales, Bacilliales, Bifidobacteriales or Rhodospirillales orders. In some preferred embodiments the bacteria are one or more of Bacillus subtilis, Bacillus subtilis var. natto, Lactobacillus plantarum, Lactobacillus acidophilus, Lactobacillus helveticus, Lactobacillus casei, Streptococcus thermopilus or Bifidobacterium bifidum. Table A provides some examples of bacteria which can be used in the present invention.

In some embodiments, the microbes are fungi, including yeasts. In some embodiments the fungi are one or more members of the Saccharomycetales and Eurotiales orders. In preferred embodiments, the fungi are one or more of Saccharomyces cerevisiae, Yarrowia lipolytica, Phaffia rhodozyma, Candida utilis or Aspergillus oryzae. Table B provides some examples of fungi and yeasts which can be used in the present invention.

In some embodiments, a combination of microbes may be used. The purpose of using a combination could be to achieve a particular outcome with respect to fermentation. For example, use of a highly proteolytic strain, such as Bacillus subtilis var. natto or Aspergillus oryzae in conjunction with Lactobacillus plantarum would result in an acidic, protease-rich fermentation environment, which results in a protein-rich, stable product of fermentation which has enhanced shelf-life.

In some embodiments, powdered and/or pelleted forms of microbes are added to the growth medium. Alternatively or additionally, an active culture of microbes may be added to the growth medium.

The concentration of microbes added to the growth medium may be selected depending upon the desired speed of fermentation. Higher supplementation rates with an initial inoculum (for example to give a concentration of 1×105 - 1×10⁶ microbes per g of growth medium) typically achieves the desired fermentation outcome in less time than fermentation using a lower supplementation rate carried out under the same conditions.

In some embodiments wherein an active microbial culture is used for inoculation, a supplementation rate of between 0.01-10% w/w (0.1-100g per kg of growth medium) may be used. In some embodiments wherein a concentrated powder, pellets, or spores of bacteria, fungi or archea having a concentration of between around 1×107 to around 1×10¹⁰ per gram is used, a supplementation rate of 0.01-1% w/w (0.1-10 g per kg of growth medium) may be used.

In embodiments wherein a liquid bacteria or fungus stock is added to the growth medium having a concentration of between around 1×10⁵ to around 1×10⁸ cells/cfu per gram, a supplementation rate of between around 1 to around 10% w/w may be used.

In some embodiments, a previous culture may be added to the growth medium (for example, a culture previously used in or for the fermentation process which has been propagated and/or maintained - similar to how mother yeast cultures are kept by bakers). The microbial content of such cultures can vary according to storage conditions and the type and number of microbes used for the initial culture. In some such embodiments, a supplementation rate of 5-10% w/w (50-100g of mother culture per kg of growth medium) may be used.

In preferred embodiments, a supplementation rate is used which results in a microbial concentration of around 1×10² to around 1×10⁶ microbes per g of growth medium.

In some embodiments, the microbial culture is centrifuged prior to addition to the growth medium, for example to separate microbial biomass from the microbial inoculum growing medium.

In preferred embodiments, the growth medium and microbe(s) are mixed.

### Fermentation Conditions

Any suitable container may be used for fermentation, for example, reaction vats made from stainless steel, plastic, glass or wood; or a humidified chamber. Suitable containers can depend upon the physical state of the fermentation. For example, reaction vats and/or bags made from stainless steel, plastic or glass can be used when fermenting a substrate comprising a liquid, such as a growth medium comprising or consisting of the liquid invertebrate component; whereas stainless steel, plastic, glass or wood containers in a humidified chamber can be used when fermenting a solid or substantially solid substrate, such as a growth medium comprising or consisting of the solid invertebrate component.

The type of fermentation selected depends upon the nature of the growth medium, the fermentation microbes used and/or the desired outcome of the fermentation process.

In embodiments wherein the growth medium is solid or substantially solid, the fermentation may be solid state fermentation. In embodiments wherein the growth medium is liquid or substantially liquid, the fermentation may be liquid state (or liquid submerged) fermentation.

In some embodiments, the type of fermentation selected depends upon the fermentation microbes to be used. For example, some microbes (e.g. Aspergillus oryzae) perform better in solid state fermentation, whereas other microbes (e.g. Lactobacilliales species) perform better in liquid state fermentation. By 'perform better' is meant that the microbes achieve the desired fermentation outcome in less time.

At the commencement of fermentation, the content of the container in which fermentation is to be carried out comprises the growth medium and microbes. Following commencement of fermentation, the container will also comprise one or more products of fermentation.

The term 'fermentation mixture' as used herein refers to the contents of the container during fermentation.

The conditions for fermentation may be selected and/or controlled for the purpose of optimising the fermentation process and/or tailoring the resultant product(s), for example in terms of the product's nutritional value or additional benefits. In some embodiments, one or more of the following conditions may be selected and/or controlled: temperature, pH of the fermentation mixture, anaerobic/aerobic conditions, incubation time and inhibition or termination of fermentation. In some embodiments, the conditions may be controlled throughout incubation. In alternative embodiments, particular conditions may be selected at the start of incubation.

In some embodiments, the temperature of the fermentation mixture is between around 4°C to around 60°C at the commencement of incubation. In some embodiments, the temperature of the fermentation mixture is maintained between around 4°C to around 60°C during incubation. The use of low temperatures, such as around 4-16°C, may be used where incubation occurs for an extended period, for example one week or more. In some embodiments, the temperature of the fermentation mixture at the commencement of incubation and/or maintained during incubation may be selected in accordance with the microbes used. Table 1 provides some examples of preferred temperature ranges for the fermentation mixture for given microbe(s).

**Table 1**

| Microbe(s) | Approximate preferred incubation temperature range |
|---|---|
| Bacillus subtilis var. natto | 30 - 37°C |
| Lactobaccilus planatarum | 28 - 38°C |
| Streptococcus thermopilus | 30 - 42°C |
| Yarrowia lipolytica | 24 - 34°C |
| Aspergillus oryzae | 24 - 32°C |
| Any combination of the abovementioned microbes | 20 - 30°C |

In some embodiments, the humidity of the fermentation container is controlled. In some embodiments, relative humidity (RH) is maintained above around 80%, above around 85% or above around 90%.

In some embodiments, incubation is carried out under aerobic conditions, or micro aerophilic conditions. In alternative embodiments, incubation is carried out under anaerobic conditions. In some embodiments, anaerobic or aerobic conditions may be selected in accordance with the microbes used, and/or the desired product of fermentation. For example, certain microbes, such as Lactobacillus species, prefer anaerobic conditions. Other microbes, such as Aspergillus oryzae and Bacillus species, prefer aerobic conditions. Modulation of these conditions can be achieved by standard methods, for example aeration of the fermentation mixture (aerobic), or exclusion of air from the reactor and/or supplementation with CO₂ and/or nitrogen (anaerobic).

Incubation time varies depending upon the nature and type of the invertebrate substrate, the microbes added to the growth medium, and the desired properties of the resultant product of fermentation.

In some embodiments, incubation time is between 6 hours and 14 days; more preferably between 6 hours and 7 days. In some embodiments comprising Aspergillus oryzae as the microbe in the fermentation process, the incubation time is around 2-5 days. In some embodiments comprising Lactobacillus species as the microbe in the fermentation process, the incubation time is around 12 hours to 3 days. In some embodiments using Bacillus subtilis var. natto only as the microbe in the fermentation process, the incubation time is 72 hours or less, and more preferably 48 hours or less. In some embodiments wherein a combination of Bacillus var. natto and Aspergillus oryzae are used as the microbes in the fermentation process, incubation time may be around 24 to 108 hours; or more preferably around 48 to around 96 hours.

In some embodiments, fermentation is monitored to establish one or more of: the temperature or pH of the fermentation mixture; the degree of protein hydrolysis; the degree of enzyme activity; the microbial count; or the metabolite content. These parameters may be measured by any suitable method, for example, the degree of protein hydrolysis may be established using one or more of SDS PAGE (sodium dodecyl sulfate polyacrylamide gel electrophoresis); pepsin digestibility; enzyme activity assays (e.g. protease, amylase, phytase); HPLC-based metabolite profiling (proteins, peptides, amino acids); GC/MS-based metabolite profiling (fatty acids, volatile organic acids); culture-dependent and independent microbiology methods (CFU plate counts, 16S/gene-specific PCR, qPCR, sequencing).

In some embodiments the fermentation mixture is mixed during incubation. In some embodiments, mixing is continuous or substantially continuous. In alternative embodiments, the fermentation mixture may be stirred occasionally, such as one or two times per hour, e.g. for 30 seconds every hour. Any suitable means of mixing may be used, such as an adaptive continuous mixer, or a blade agitator for liquid-state fermentation.

### One-stage vs two or more-stage fermentation processes

In some embodiments, the fermentation process is carried out as a 'one-stage' process wherein fermentation is carried out in a single step. For example, a single fermentation step may be carried out using all desired microbes and/or a growth substrate comprising all desired invertebrate components. In some such embodiments, the growth medium comprises an invertebrate substrate which comprises or consists of one or more of the solid invertebrate component; the liquid invertebrate component, or the non-lipid fraction of the liquid invertebrate component. In some embodiments, the growth medium comprises an invertebrate substrate which comprises or consists of both the solid and the non-lipid liquid invertebrates components.

In alternative embodiments, the fermentation process is carried out as a 'two or more stage' process wherein two or more fermentation steps are carried out. In some such embodiments, fermentation using different microbes and/or conditions may be carried out separately. Alternatively, or additionally, fermentation of different growth media may be carried out separately. For example, a growth medium may be subjected to a first fermentation step (for example using a particular microbe or microbes, and/or under particular conditions), followed by a second fermentation step (using, for example, different microbes or conditions). As an alternative example, fermentation of a growth medium comprising an invertebrate substrate which comprises or consists of the solid invertebrate component may be carried out separately to fermentation of a growth medium comprising an invertebrate substrate which comprises or consists of the liquid invertebrate component, or one or more fractions of the liquid invertebrate component. Separate fermentation steps may be carried out in sequence (for example, a growth medium may be subjected to a first fermentation step, followed by a second fermentation step). Alternatively or in addition, separate fermentation steps may be carried out in parallel, in that separate fermentation steps may be started or carried out at the same time or around the same time (for example, a growth medium comprising a particular invertebrate substrate may be subjected to a fermentation step; at the same time a separate fermentation step may be carried out using a growth medium comprising an alternative invertebrate substrate). In 'two or more stage' processes, the fermentation mixtures may be combined at any stage after fermentation has commenced.

Selection of a one, or two or more- stage fermentation process can depend upon the nature and type of the microbes included in the fermentation mixture and the desired properties of the resultant product. For example, where it is desirable to use microbes which prefer aerobic fermentation conditions and microbes which prefer anaerobic conditions, a two or more-stage process may be used, involving separate anaerobic and aerobic fermentation processes. For example a growth medium could be subjected firstly to aerobic fermentation using Aspergillus oryzae or Bacillus subtilis var. natto; followed by anaerobic fermentation using Lactobacillus species. As an alternative example, a growth medium comprising an invertebrate substrate comprising or consisting of the solid invertebrate component may be subjected to aerobic fermentation using Aspergillus oryzae; and a growth medium comprising an invertebrate substrate comprising or consisting of the liquid invertebrate component or one or more fractions of the liquid invertebrate component may be separately subjected to anaerobic fermentation using Lactobacillus species. The two fermentation mixtures may be combined at any suitable point.

In some embodiments involving a two-or more stage fermentation process, additives or additional additives may be added to the fermentation mixture prior to the commencement of one or more of the fermentation steps. The additives may be selected for a particular purpose or to achieve a particular outcome or product. For example additives may be selected which provide a nutrient source for the microbe(s), particularly those used in the fermentation step that follows; which stimulate or enhance growth of the microbe(s), particularly those used in the fermentation step that follows; which stimulate production of a particular microbial metabolite in the fermentation step that follows; and/or which create preferable fermentation conditions, particularly for the microbe(s) used in the fermentation step that follows. In some embodiments, the additives may be one or more simple sugars (for example, sucrose, glucose, molasses); and/or one or more sources of complex carbohydrate (for example bran, cereal fines, rice husks or wheatgerm.

As an example, a first fermentation step may be carried out using Aspergillus oryzae and a growth medium comprising or consisting of the solid invertebrate component, the non-lipid invertebrate component and an additive comprising a complex carbohydrate (for example bran, cereal fines, rice husks and/or wheatgerm). A second fermentation step may be carried out using Lactobacillus and a growth medium comprising or consisting of the non-lipid liquid invertebrate component and an additive comprising one or more simple sugars (for example sucrose, glucose and/or molasses). As a further example, a first fermentation step may be carried out using Aspergillus oryzae and a growth medium comprising or consisting of the solid invertebrate component and an additive comprising a complex carbohydrate (for example bran, cereal fines, rice husks and/or wheatgerm). A second fermentation step may be carried out using Lactobacillus and a growth medium comprising or consisting of the liquid invertebrate component and an additive comprising one or more simple sugars (for example sucrose, glucose and/or molasses). In these examples, the presence of the sugar(s) aids rapid initiation of lactic acid production in the second fermentation step, by serving as a source of nutrition for the Lactobacillus.

As an alternative example, one or more additives could be selected which induce expression of particular microbial genes. For example, an additive could be selected which stimulates expression of transgenic constructs in GM microbes, resulting in production of desired nutrients (for example, omega-3-fatty acids).

In embodiments wherein the fermentation is a two or more-stage fermentation process, two or more of the fermentation mixtures may be combined at any suitable point. The combined mixture may then be subjected to one or more further fermentation steps, with or without the addition of further additives. In some embodiments, multiple fermentation steps may be carried out. For example, the combined fermentation mixture resulting from first and second stage fermentation processes maybe subjected to multiple fermentation steps with, optionally, the addition of one or more additives prior to the commencement of each step.

In some embodiments, a final fermentation step is carried out using acid producing microbial species. In some embodiments, the final fermentation step is carried out using Acetobacter and/or Lactobacillus sp. This can be advantageous as fermentation using such species acidifies the fermentation mixture, thereby extending shelf life of any resultant fermentation product or any product with which the fermentation product is combined. For example, a first fermentation step may be carried out using Aspergillus oryzae and a growth medium comprising or consisting of the solid invertebrate component and, optionally, one or more additives. A second fermentation step may be carried out using Bacillus natto and a growth medium comprising or consisting of the liquid invertebrate component and, optionally, one or more additives. A third and final fermentation step may then be carried out using Lactobacillus sp. and a growth medium comprising the combined fermentation mixtures resulting from the first and second stage fermentation processes and, optionally, one or more additives. Such an embodiment can be advantageous, as the first fermentation step results in enzyme production, the second fermentation step (the growth medium for which is GRAS) typically occurs rapidly (i.e the desired fermentation outcome is achieved rapidly); and the third fermentation step results in acidification of the mixture, thereby prolonging shelf-life of any resultant product.

Use of a two or more-stage fermentation process can be advantageous. For example, the solid invertebrate component largely comprises invertebrate chitin, which is a glucosamine polymer and poorly digestible to most animals. Due to its composition, chitin is not a preferred substrate for microbial fermentation where more favoured substrates, such as amino acids, sugars or starch are present. However, when no other, more favourable substrate is available, microbial fermentation of a substrate composed primarily of chitin will occur, leading to its partial hydrolysis. As such, separating the fermentation processes so that a growth medium comprising the solid component of the invertebrate (only) is subjected to fermentation can result in more and/or faster hydrolysis of chitin compared to fermentation of a heterogeneous growth medium, such as a growth medium comprising both the solid invertebrate component and the liquid invertebrate component or any fraction of the liquid invertebrate component. Enhanced chitin hydrolysis aids reduction of chitin (fibre), which is generally considered indigestible and/or anti-nutritional to animals, for example, fish, and generates more accessible nutrients, such as glucosamine.

In some embodiments, one or more of the fermentation mixtures may be separated into fractions. In some embodiments, the fermentation mixture(s) are separated into lipid and non-lipid fractions. This may be done by any suitable means, for example by the use of gravity and/or temperature, such as the use of a centrifuge; or temperature-assisted gravitational separation, for example the liquid component may be refrigerated until it has settled into fractions which can then be separated (the lipid fraction will typically solidify whilst the non-lipid fraction remains a liquid, allowing it to be removed).

In some embodiments, the lipid fraction of the fermentation mixture (the 'fermented lipid fraction') is removed from the process following separation from the non-lipid component of the fermentation mixture. This can be beneficial as separation of the lipid and non-lipid fractions can be easier following hydrolysis. Further to this, fermentation can result in a change in the fatty acid profile and/or antioxidation properties of the lipids, which can be beneficial in some animal feed products.

In some embodiments, the fermented solid component of the fermentation mixture (`fermented solid by-product (chitin-rich)') is removed from the process following fermentation. In some embodiments, the fermented solid component may be washed with a suitable solvent, such as a food-grade solvent, for example water or phosphate buffered saline, to aid or achieve the extraction of enzymes, such as soluble enzymes and/or nutrients, followed by filtration, to give rise to a filtrate which comprises the solvent and any extracted material, and a filtride. In some embodiments, the filter may be of a suitable format and/or pore size to exclude one or more components of the extracted material from the filtrate, for example, one or more of the microbes used in the fermentation process. The filtrate may then be returned to the process for use as or addition to a growth medium for microbial fermentation. This can be beneficial as the enzymes and/or nutrients in the filtrate can assist fermentation. The fermented solid component as obtained either directly from the fermentation process, or as remaining following washing and filtration, can be used in alternative processes, either directly, or following thermo-mechanical and/or chemical processing.

To give an example of the benefit of a such separation using the three-stage fermentation process example set out above (namely a first fermentation using Aspergillus oryzae and a growth medium comprising or consisting of the solid invertebrate component and, optionally, one or more additives; a second fermentation step using Bacillus natto and a growth medium comprising or consisting of the liquid invertebrate component and, optionally, one or more additives and a third fermentation step using Lactobacillus sp. and a growth medium comprising the combined fermentation mixtures resulting from the first and second stage fermentation processes and, optionally, one or more additives): the fermented solid fraction of the fermentation mixture may be removed following the first fermentation step, washed, for example with water, and filtered, with the filtrate collected using a filter with a format or pore size which prevents the Aspergillus oryzae passing into the filtrate. The filtrate may then be added to the growth medium for the third fermentation step (as shown in Figure 5). This arrangement can be beneficial as current QPS (European) and GRAS (American) legislation limits the use of filamentous fungi in products directly, however, filamentous fungi such as Aspergillus oryzae are typically very good at synthesizing enzymes and various co-factors, and as such are advantageous to use in fermentation step(s) according to the present invention. Filamentous fungi produce a mycelium, which can be easily excluded via filtration. Accordingly, in the example given above, the fungi can be used beneficially in the first fermentation step, but are excluded from the final fermentation product, thus avoiding potential difficulties with regulatory requirements, as well as undesirable changes in the nutritional profile of the fermentation product as a result of the inclusion of filamentous fungi.

### Termination or inhibition of fermentation

Fermentation may be terminated or inhibited at a desired point. In some embodiments, fermentation may be terminated or inhibited when the rate of fermentation is no longer optimal, for example, when a microbial count indicates that the microbial growth curve is substantially at the end of the exponential phase or in the stationary phase; or when the degree of protein hydrolysis or amount of enzyme activity reaches a pre-determined point. Fermentation may be monitored to establish the desired point for termination or inhibition. Monitoring may be carried out using any suitable method, for example by measuring the temperature or pH of the fermentation mixture; the degree of protein hydrolysis; the degree of enzyme activity; the microbial count; or the metabolite content. Such parameters may be measured by any suitable method, for example SDS PAGE; pepsin digestibility; spectrophotometric enzyme activity assays; HPLC-based metabolite profiling and quantification, GC/MS-based metabolite profiling and quantification; or culture-dependent and independent microbiology methods (CFU plate counts, 16S/gene-specific PCR, qPCR, sequencing).

In some embodiments, fermentation is terminated. By 'termination of fermentation' is meant killing all or substantially all of the microbes within the fermentation mixture, or rendering all or substantially all of the microbes within the fermentation mixture non-viable.

In some embodiments, the method used to terminate fermentation kills or renders non-viable all or substantially all of the active matter within the fermentation mixture. By "active matter" is meant microbes and enzymes that are present in the fermentation mixture. In such embodiments, the resultant fermentation mixture is considered to be pasteurised.

Fermentation may be terminated by any suitable method or combination of methods. In some embodiments, fermentation is terminated by elevating the temperature of the fermentation mixture. The temperature required to achieve termination may vary in accordance with the microbes and/or active matter in the fermentation mixture. In some embodiments, the temperature of the fermentation mixture is raised to above around 60°C, above around 65°C, above around 70°C, above around 75°C, above around 80°C, above around 85°C, above around 90°C or above around 95°C. In some embodiments, the temperature is maintained below around 130°C. In some embodiments, the temperature of the fermentation mixture is elevated for at least 3, 4, 5, 6, 7, 8, 9, 10, 11, 12, 13, 14 or 15 minutes. In preferred embodiments, the temperature of the fermentation mixture is raised to at least 80, 90, or 95°C for at least 5 minutes.

In some embodiments, fermentation is terminated by other suitable means, such as irradiation of the fermentation mixture with ultraviolet light and/or gamma rays or use of high pressure technology.

In alternative embodiments, fermentation is inhibited. By 'inhibition of fermentation' is meant that some or all of the active matter within the fermentation mixture is rendered reversibly inactive.

In some such embodiments, inhibition of fermentation is achieved by raising the temperature of the fermentation mixture. In some such embodiments, a temperature is selected which achieves inhibition of fermentation whilst avoiding or minimizing termination of fermentation and/or preserving the nutritional quality of the fermentation mixture. In some embodiments the temperature of the fermentation mixture is raised to around 35°C - 55°C. In some embodiments the temperature of the fermentation mixture is raised to around 35°C, 37°C, 38°C, 39°C, 40°C, 41°C, 42°C, 43°C, 44°C, 45°C or 46°. In preferred embodiments the temperature of the fermentation mixture is raised to around 37°C. In some embodiments, the temperature of the fermentation mixture is elevated for at least 3, 4, 5, 6, 7, 8, 9, 10, 11, 12, 13, 14 or 15 minutes.

In some embodiments, fermentation is inhibited by drying of the fermentation mixture. In some such embodiments, the fermentation mixture is transferred from the fermentation container to a suitable drying environment. The fermentation mixture may be dried using any suitable means. For example, spray drying may be used to dry liquid fermentation mixtures; or the use of a fluidized bed dryer, a dehydrator, such as a low temperature dehydrator or dehydrator oven, or free drying. Clean/food-grade or sterile conditions may be maintained throughout drying. In some embodiments, the moisture content of the dried fermentation mixture is less than around 15%, less than around 12%, less than around 10%, less than around 9%, less than around 8%, or less than around 7%. In preferred embodiments, the moisture content of the fermentation mixture is less than around 6%.

In some embodiments, fermentation is inhibited by other suitable means, such as cooling (to below 4°C) or freezing the fermentation mixture; or packaging the fermentation mixture under suitable atmospheric conditions (such as inert gas, or elevated pressure).

Whether fermentation is terminated or inhibited depends upon the type of fermentation process used, the nature of the growth medium, the fermentation microbes used and/or the desired product. In some embodiments, it is preferable to ensure that all or substantially all microbes and/or active matter in the fermentation mixture is killed or rendered non-viable, for example, where it is desirable for the product resulting from fermentation to be free or substantially free of microbes and/or active matter. This may be the case where the product is intended to be classified as feed, as this can reduce the regulatory steps required for the product to reach the market. Alternatively, in some embodiments wherein the microbes added to the growth medium are considered not to represent a health, safety or pathogenic risk on or to humans, animals or the environment; and/or are considered and/or shown to provide or produce a beneficial effect on or to humans, animals or the environment, fermentation may be inhibited, to provide a product with an active microbial content when inhibition is reversed.

Hereinafter, the term 'fermentation product' is used to refer to the fermentation mixture after fermentation has been terminated or inhibited.

Accordingly, in a second aspect of the invention, there is provided a composition obtained from the process according to a first aspect of the invention.

### Post fermentation processing

In some embodiments, the fermentation product is packaged. Packaging may occur under clean, food-grade or sterile conditions. In embodiments wherein the fermentation product is packaged following inhibition of fermentation, the packaged product may provide or be maintained under conditions which limit or prevent further fermentation. For example, the packaging may prevent ingress of moisture.

In alternative embodiments, the fermentation product is further processed. In some such embodiments, the fermentation product may be dried, or further dried. In some such embodiments, drying is achieved by elevation of the temperature of the fermentation product. In some embodiments, the fermentation product is transferred from the fermentation container to a suitable drying environment. The fermentation product may be dried using any suitable means. For example, the use of a fluidized bed dryer, a dehydrator, such as a low temperature dehydrator (at a temperature of less than about 45°C; less than about 40°C; more preferably less than about 37°C); or free drying. In some embodiments, the moisture content of the dried fermentation mixture is less than around 10%, less than around 9%, less than around 8%, less than around 7%, less than around 6%, or less than around 5%. In preferred embodiments, the moisture content of the fermentation mixture is less than 6% or less than 5%.

In some embodiments, the fermentation product is broken up or powdered using suitable means, for example a hammer mill or spinning disc homogenizer.

In some embodiments, one or more additives may be added to the fermentation product. Such additives include material or substances known or considered to be beneficial to or to enhance animal health and/or welfare, and/or known or considered to be immunogenic to one or more animals, in that it stimulates and/or promotes an immune response and/or primes or stimulates the innate immune system. For example, substances known to have a positive effect on gut microbiota. Such additives includes anti-oxidants; micronutrients; pre-biotics, for example indigestible fibers such as inulin or oligofructose; pro-biotics, such as dried cultures and/or spores of probiotic bacteria, yeasts, fungi, for example Lactobacillus and Saccharomyces. Additives may be in any suitable form, for example, in powdered or liquid form.

Accordingly, in a third aspect of the invention, there is provided a composition comprising 10-70% protein, of which 20-100% is invertebrate-derived protein; 1-40% fat, of which 5-100% is invertebrate-derived fat; 1-30% fibre, of which 5-100% is invertebrate-derived fibre; and 1-30% carbohydrate, of which 5-100% is invertebrate derived carbohydrate.

By 'fibre' is meant non-digestible complex carbohydrates.

In some preferred embodiments, the composition according to the third aspect of the invention comprises 10-70% protein, of which 50-100% is invertebrate-derived protein; 1-40% fat, of which 5-100% is invertebrate-derived fat; 1-30% fibre, of which 5-100% is invertebrate-derived fibre; and 1-30% carbohydrate, of which 5-100% is invertebrate derived carbohydrate.

Accordingly, some embodiments of the invention provide a process for converting invertebrates into a feedstock(s). In some embodiments, the process enhances one or more of the nutritional, chemical, anti-oxidant, biological, and/or probiotic profile of an invertebrate substrate: during fermentation, the fermentation microbes produce an array of different enzymes, and interact with the growth medium on multiple levels, which can result in complex physio-chemical modification of the growth medium (for example by phytate digestion or fibrinolysis; or production of omega-3 fatty acids; organic acids such as lactic acid; antioxidants or pigments; and/or serine proteases such as nattokinase). This can result in an improvement in the digestibility and bioavailability of nutrients within the resultant fermentation product; confer immunogenic and/or health and welfare benefits on the consumer of the product; and/or lower the pH of the product by acid production, thereby reducing or preventing the growth of food-spoilage microbes and extending shelf-life, as well as obviating the need for the addition of antimicrobial compounds. In addition, such acids may be a source of nutrition or other benefit for some animals, for example, lactic acid has been explored as a substitute for antibiotics or antimicrobial additives in animal feeds (Panel & Feedap. EFSA journal; 2015; 13(12) 4198). In contrast, enzymatic hydrolysis is limited to the type of enzymes added to the growth medium, and achieving the same level of complexity of modification of the growth medium would be economically unfeasible.

Furthermore, some embodiments of the invention provide a flexible process for obtaining feedstock(s) from invertebrates which allows tailoring of the resultant product, for example to provide a product with a particular nutritional, chemical, biological, immunogenic and/or probiotic profile. In some embodiments of the invention this is achieved by the selection and use of one or more parameters, such as processing of the invertebrates; selection of a particular invertebrate substrate as a growth medium for microbial fermentation; inclusion of one or more additives in the growth medium; selection of particular microbes; selection of a particular fermentation process and fermentation conditions; and the selection of termination or inhibition of fermentation. Some embodiments of the invention offer the opportunity, through careful selection of such parameters, to convert invertebrates into an optimized feedstock for a particular species of livestock.

In some embodiments, processing of the invertebrates and selecting a particular invertebrate substrate as a growth medium allows the invertebrates to be used in a nutritionally optimal manner. For example, the lipid invertebrate component can be separated and removed, as many fermentation microbes tend to perform poorly or less optimally on fat substrates, to allow creation of a growth medium comprising the solid and/or non-lipid liquid invertebrate fractions. As a further example, the liquid invertebrate component can be processed separately from the solid invertebrate component, as some fermentation microbes tend to perform less optimally on substrates comprising a high chitin content.

In some embodiments the supplementation of the growth medium with additives can be used to enhance and/or optimise the fermentation process.

In some embodiments, microbes and fermentation conditions can be selected to achieve a particular fermentation outcome. As discussed above, different microbes produce different enzymes and affect the growth medium in different ways, and this can be utilised in some embodiments to create a tailored product.

The selection of a one- or two-stage fermentation process allows the most appropriate microbes and fermentation conditions to be applied to each growth medium.

The termination or inhibition of fermentation allows the microbial and active matter content of the fermentation product to be controlled. For example, inhibition of fermentation results in a product which, when reconstituted, contains microbes and/or active matter which are considered to improve consumer health and/or digestion. This can produce favourable effects in terms of consumer food conversion ratios and growth. Furthermore, the presence of microbial antigens and probiotics in the fermentation product can stimulate the innate immune system of the consumer.

Some embodiments of the invention provide a process for obtaining feedstock(s) from invertebrates which avoids the direct addition of enzymes. This may be particularly relevant to scenarios in developing countries, where the need for low-cost, high nutritional value animal feed can be high, and where it would be both challenging and expensive to provide a storage system for enzymes, particularly where the use of multiple different enzymes is desired.

Some embodiments of the invention provide a process for obtaining feedstock(s) from invertebrates which is self-perpetuating without the need for expensive storage equipment, and with a requirement for only basic microbial propagation knowledge. For example, a refrigerator and a -80°C freezer would be sufficient to store the microbial stocks required for a fermentation process according to the present invention effectively indefinitely. As self-replicating entities, such microbes would not require external replenishment; microbial cultures can be propagated and maintained in between fermentation processes (similar to how mother yeast cultures are kept by bakers). In an industrial process, such cultures would be refrigerated between fermentation processes, with a proportion stored at ultra low temperatures (-80°C) to maintain stocks.

Some embodiments of the invention provide a process which results in a product for use as a feedstock or feedstocks. Some embodiments of the invention provide a process which results in a product for use as a feedstock in the aquaculture, poultry and swine industry, as well as for companion animals.

Some embodiments of the invention provide a process which results in a product for use as a feedstock which has health and/or welfare improving and/or immunogenic properties. Some embodiments of the invention provide a process which results in a product for use as a feedstock which has an enhanced anti-oxidant content. Some embodiments of the invention provide a process which results in a product for use as a feedstock which has an enhanced shelf-life.

Some embodiments of the invention provide products for use as a feedstock or feedstocks. Some embodiments of the invention provide products for use as a feedstock in the aquaculture, poultry and swine industry and for companion animals. Some embodiments of the invention provide products which have an enhanced nutritional profile. Some embodiments of the invention provide products which have an enhanced shelf-life.

Some embodiments of the invention provide products which have an enhanced chemical, biological, immunogenic, anti-oxidant and/or probiotic profile. Such products are known as 'functional feeds', meaning that they provide one or more specific benefit to the consumer in addition to nutritional content. Such products may be beneficial where the specific benefit is otherwise provided by one or more additional products to the main food of an animal, as provision of a functional feed can be cheaper, easier and, for embodiments wherein the product has an enhanced probiotic profile, may contribute less to antimicrobial resistance development.

The following examples are provided to illustrate the present invention and should not be construed as limiting thereof.

### Example 1: invertebrate processing and preparation of the invertebrate substrate for fermentation

Hermetia illucens larvae and/or pupae were washed in a chilled waterbath (5°C), and then pasteurised in an autoclave oven (121°C). The larvae and/or pupae were then perforated using a mechanical needle roller and immediately pressed using a heated stainless steel hydraulic press. For each 1kg of larvae/pupae pressed, approximately 450g of liquid was extracted, leaving approximately 550g of solids in the form of a pressed cake. The liquid was collected. The pressed cake (the solid invertebrate component) was homogenized using an industrial blender to reduce particle size to approximately less than 2.5 mm.

The collected liquid component consisted of a lipid fraction, and a non-lipid fraction which comprised some solids (up to 5% of non-lipid fraction weight). The fractions were separated using gravity (settling or centrifugation), yielding approximately 75-100g of unrefined fat (the lipid fraction of the invertebrate liquid component) and approximately 350-375g of non-lipid fraction (the non-lipid fraction of the liquid invertebrate component).

### Example 1a: Preparation of a Growth Medium

225g of water and/or non-lipid fraction of the liquid invertebrate component from Example 1 was added to 100g of dry wheat bran and mixed to gelatinise the bran. The mixture was pasteurised/ sterilised by autoclaving (121°C).

550g of homogenized solid invertebrate component from Example 1 was mixed with 325g of gelatinised bran. The pH of the mixture was determined to be slightly alkaline (7.6-8.2). A second pasteurisation/sterilisation step was optionally carried out.

### Example 2: invertebrate processing and preparation of the invertebrate substrate for fermentation

Hermetia illucens larvae and/or pupae were washed in a chilled waterbath (5°C), and then pasteurised in an autoclave oven (121°C). The larvae and/or pupae were then perforated and extracted using a heated hydraulic press. For each 1kg of larvae/pupae pressed, approximately 450g of liquid was extracted, leaving approximately 550g of solids in the form of a pressed cake. The liquid was collected. The pressed cake (the solid invertebrate component) was homogenized using an industrial blender to reduce particle size to approximately less than 2.5 mm.

The collected liquid component consisted of a lipid fraction, and a non-lipid fraction which comprised some solids (up to 5% of non-lipid fraction weight). The lipid and non-lipid fractions were optionally separated using gravity (centrifugation), yielding approximately 75-100g of unrefined fat (the lipid fraction of the liquid invertebrate component) and approximately 350-375g of non-lipid fraction (the non-lipid fraction of the liquid invertebrate component).

### Example 2a: Preparation of a Growth Medium

A liquid invertebrate component was prepared in accordance with Example 2. The component was not separated into lipid and non-lipid fractions. 10g glucose was added for each kg of the liquid invertebrate component. The mixture was pasteurised/ sterilised by autoclaving (121°C). The pH of the mixture was determined to be slightly alkaline (7.6-8.2).

### Example 3: One-stage fermentation

This example involves aerobic fermentation of an alkaline growth medium, utilizing two food industry microbes: Bacillus subtilis var. natto (`BSN', isolated from a soybean natto dish); and Aspergillus oryzae (`AO', isolated from a commercial miso starter).

Microbial inoculums were prepared. BSN was cultivated from a cryogenically-preserved culture in a shaking liquid medium (for example Luria Broth) at 35°C overnight. AO was overgrown on bran over a 3 day period then dried at 37°C and the spores collected using a fungal spore harvester.

50 mL of BSN culture (>1 × 10⁸ cells per mL) and 2.5g of AO spores were added to 1kg of growth medium prepared according to Example 1a in a 2 litre fermentation vat and mixed thoroughly. Air (filtered through a 0.22µm membrane to exclude contaminants) was supplied into the fermentation mixture to promote aerobic fermentation. The fermentation mixture was incubated at 28°C for 48 hours, mixing for 30 seconds every hour to ensure homogeneity.

Fermentation was then inhibited. The fermentation mixture was transferred to a low temperature drying oven (≤40°C) and dried to a final moisture content of <6%. As an alternative, fermentation was terminated by heating the fermentation mixture in an oven to 80°C for 15 min, before drying to a moisture content of <6% using a drying oven (≤70°C). In each case, 300-400g of dried fermentation product was generated per kg of wet fermentation product.

The dried fermentation product was processed into a fine powder using a hammer mill.

Table 2 shows a comparison of nutritional composition change induced by BSN and AO mixed fermentation **(C)** compared to the input invertebrate feedstock (Hermetia illucens, **A)** and the growth medium prior to fermentation **(B).**

**Table 2**

| | **A:** Raw Hermetia illucens larvae (5^{th}/6^{th} instar) | **B:** Growth medium prepared according to Example 1 | **C:** Fermentation product of Example 2 (fermentation inhibited) |
|---|---|---|---|
| Moisture content (%) | 67.0% | 62.3% | 69.6% |
| Protein content (%) | 40.1 % | 46.2 % | 49% |
| Fibre content (incl. chitin) (%) | 13.2% | 18.7% | 15.1% |
| Lipid content (%) | 41.5% | 14.4% | 10.2% |
| pH | 8.1 | 7.95 | 7.2 |

All samples were analysed in triplicate. Moisture content was determined by weighing samples pre-/post-drying at 70°C for 4 hours. Other values were determined using dried samples (moisture <10%). Protein content was determined using a LECO TruMac analyser. Fibre content was determined as leftover mass following sample digestion in 10% NaOH. Lipid content was determined using hexane extraction.

Figure 6 shows an SDS-PAGE of a growth medium comprising 80% invertebrate substrate (3:1 solid invertebrate component: non-lipid fraction of the liquid invertebrate component) / 20% gelatinised wheat bran, subjected to microbial fermentation using Bacillus subtilis var. natto and Aspergillus oryzae (28°C, aerobic conditions, initial pH: 8.0 / final pH: 7.2) for 48 hours. The results demonstrate partial protein hydrolysis as shown by a reduction in average protein size (kDa) (major vanishing protein bands indicated as α, β, γ) in Lane B (post-fermentation) compared to the control in Lane A (pre-fermentation).

### Example 4: One-stage fermentation

This example involves aerobic fermentation of an alkaline growth medium, utilizing one food industry microbe: Bacillus subtilis var. natto (`BSN', isolated from a soybean natto dish).

A microbial inoculum was first prepared. BSN was cultivated from a cryogenically-preserved culture in a shaking liquid medium (for example Luria Broth) at 35°C overnight. 50 mL of BSN culture (>1 × 10⁸ cells per mL) was added to 1kg of growth medium prepared according to Example 2a in a 2 litre fermentation vat and mixed thoroughly. Air (filtered through a 0.22µm membrane to exclude contaminants) was supplied into the fermentation mixture to promote aerobic fermentation. The fermentation mixture was incubated at 28°C for 48 hours, mixing continuously to ensure homogeneity and good growth medium aeration.

Fermentation was then inhibited. The fermentation mixture was transferred to a low temperature drying oven (≤40°C) and dried to a final moisture content of <6%. As an alternative, fermentation was terminated by heating the fermentation mixture in an oven to 80°C for 15 min, before drying to a moisture content of <6% using a drying oven (≤70°C). In each case, 200-300g of dried fermentation product was generated per kg of wet fermentation product.

The dried fermentation product was processed into a fine powder using a hammer mill.

### Example 5: Two-stage fermentation process

This example involves a two stage, aerobic and anaerobic fermentation process utilising two food industry microbes: Aspergillus oryzae (`AO', isolated from a commercial miso starter) was used for a first stage aerobic fermentation step; and Lactobacillus plantarum (`LP', isolated from probiotic human supplement) was used for a second stage anaerobic fermentation step.

Hermetia illucens larvae and/or pupae were washed, perforated and extracted according to Example 1. The solid invertebrate component was homogenized according to Example 1, and the liquid invertebrate component was separated into lipid and non-lipid fractions according to Example 1.

225g of water was added to 100g of dry wheat bran and mixed to gelatinise the bran. The mixture was pasteurised/ sterilised by autoclaving (121°C @ 1.5 bar). 550g of homogenized solid invertebrate component was mixed with 325g of gelatinised bran. The pH of the mixture was determined to be slightly alkaline (7.6-8.2). A second pasteurisation/sterilisation step was optionally carried out. This constitutes the 'stage-1 growth medium'.

Microbial inoculums were prepared. LP was cultivated from a cryogenically-preserved culture in a shaking liquid medium (for example de Man, Rogosa and Sharpe broth) at 35°C overnight. AO was overgrown on bran over a 3 day period then dried at 37°C and the spores collected using a fungal spore harvester.

First Stage Fermentation: 2.5g of AO spores were added to 1kg of the stage-1 growth medium and mixed thoroughly before being put in a 2 litre fermentation vat. Air (filtered through a 0.22µm membrane to exclude contaminants) was supplied into the fermentation mixture to promote aerobic fermentation. The mixture was incubated at 28°C for 48 hours, mixing the substrate for 30 seconds every hour to ensure homogeneity.

Second Stage Fermentation: 24 hours prior to completion of the stage 1 fermentation, 500g of non-lipid fraction of the liquid invertebrate component per kg of stage-1 fermentation mixture was placed in a second 3 litre fermentation vat. Additives (glucose, sucrose and/or molasses) were added to the vat at around 20g/L. pH was adjusted to below pH 7 by addition of food-grade acids (acetic and/or citric acid). 50 mL of LP culture (>1 × 10⁸ cells per mL) was added for each kg of material in the second fermentation vat. Air was excluded from the fermentation vat to achieve anaerobic conditions. The mixture was incubated at 35°C for up to 24 hours, mixing for 30 seconds every hour to ensure homogeneity.

Following completion of stage 1 fermentation, the stage 1 fermentation mixture was transferred from the stage 1 fermentation vat into the stage 2 fermentation vat and mixed thoroughly. Air was excluded to achieve anaerobic conditions and the merged mixture was incubated at 35°C for 12 to 24 hours or until a pH below 4.5 was reached, mixing for 30 seconds every hour to ensure homogeneity.

Fermentation was then inhibited. The fermentation mixture was transferred to a low temperature drying oven (≤40°C) and dried to a final moisture content of <6%. As an alternative, fermentation was terminated by heating the fermentation mixture in an oven to 80°C for 15 min, before drying to a moisture content of <6% using a drying oven (≤70°C). In each case, 200-350g of dried fermentation product was generated per kg of wet fermentation product.

The dried fermentation product was processed into a fine powder using a hammer mill.

Table 3 shows the reduction in average chitin content (average chitin measured per treatment / average dry weight of sample) as determined through NaOH digestion, achieved through Aspergillus oryzae (only) fermentation of a growth substrate.

Three treatments (A, B and C) were prepared. Each treatment was composed of three 30 larvae samples, totalling 5.750 g (+/- 0.050 g) each. For treatments A and B, larvae were pasteurised, perforated and extracted in accordance with Example 1, to yield a solid and liquid invertebrate component, and the liquid component was separated into lipid and non-lipid fractions in accordance with Example 1. Sample A consisted of the solid invertebrate fraction. Sample B consisted of the solid invertebrate fraction and the non-lipid fraction of the liquid invertebrate component. Sample C (control) consisted of whole larvae which were harvested and stored in a freezer until processing.

Samples A and B were inoculated with 100 mg 2.5% Aspergillus oryzae spores (mixed with starch), and incubated at 28 °C for 2 days. All samples were then dried at 70°C until constant weight was attained, and homogenized with a mortar & pestle to achieve fine powder consistency. Samples were then digested in excess 10% NaOH solution incubated at 95°C for 24 hours, before being filtered and washed three times with deionised water. Samples were then dried at 70°C and weighed. The final weights represent the undigested fraction (chitin), which is expressed as a percentage of dry sample weight (1.850 g +/- 0.033 g).

**Table 3**

| | A: Solid invertebrate component only | B: Solid & non-lipid liquid invertebrate component | C: Whole larvae |
|---|---|---|---|
| Avg. Chitin Content (% dry weight) | 8.86 | 15.28 | 15.37 |

### Example 6: three-stage fermentation process

This example involves a three stage, aerobic and anaerobic fermentation process utilising two food industry microbes. In summary: Aspergillus oryzae (`AO', isolated from a commercial miso starter) was used for a first stage, solid-state aerobic fermentation step using a growth medium comprising the solid invertebrate component; and Lactobacillus plantarum (`LP', isolated from probiotic human supplement) was used for a second stage, liquid anaerobic fermentation step using a growth medium comprising the liquid invertebrate component. The third stage comprised mixing the stage 1 and stage 2 fermentation mixtures, and subjecting the resultant mixture to a short liquid anaerobic fermentation step.

Hermetia illucens larvae and/or pupae were washed, pasteurised and perforated and extracted according to Example 2.

The growth medium for the first fermentation step (`the stage 1 growth medium') was then prepared in the following manner: the solid invertebrate component was homogenized using a kitchen blender. No additives were used. The pH of the mixture was determined to be neutral to slightly alkaline (7.1-7.8). The medium was then autoclaved.

The growth medium for the second fermentation step (`the stage 2 growth medium') was prepared in accordance with Example 2a.

Microbial inoculums were prepared. LP was cultivated from a cryogenically-preserved culture in a shaking liquid medium (for example de Man, Rogosa and Sharpe broth) at 35°C overnight. AO was overgrown on bran over a 3 day period then dried at 37°C and the spores collected using a fungal spore harvester.

Stage 1 Fermentation: 2.5g of AO spores were added to 1kg of the stage 1 growth medium and mixed thoroughly before being formed into a 2 cm sheet in a 5 litre fermentation container. Air (filtered through a 0.22µm membrane to exclude contaminants) was supplied into the fermentation container to promote aerobic fermentation. The mixture was incubated at 28°C for 72 hours, with no mixing.

Stage 2 Fermentation: 50 mL of LP culture (>1 × 10⁸ cells per mL) was added for each kg of the stage 2 fermentation growth medium in a 5 litre fermentation vat. Air was excluded from the fermentation vat to achieve anaerobic conditions. The mixture was incubated at 35°C for up to 24 hours, mixing for 30 seconds every hour to ensure homogeneity and better mixture acidification.

Stage 3 Fermentation: Following completion of stage 1 fermentation, the stage 1 fermentation mixture was transferred from the stage 1 fermentation container into the stage 2 fermentation vat in a sterile manner: for every kg of stage 2 fermentation mixture, 50g of stage 1 fermentation mixture was added. Air was excluded to achieve anaerobic conditions and the mixture was incubated at 35°C for 12 hours until a pH below 4.5 was reached, mixing for 30 seconds every dhour to ensure homogeneity.

Fermentation was then inhibited. The resultant fermentation mixture was transferred to a low temperature drying oven (≤40°C) and dried to a final moisture content of <6%. As an alternative, fermentation was terminated by heating the fermentation mixture in an oven to 80°C for 15 min, before drying to a moisture content of <6% using a drying oven (≤70°C). In each case, 200-350g of dried fermentation product was generated per kg of wet fermentation product.

The dried fermentation product was processed into a fine powder using a hammer mill.

In order to address various issues and advance the art, the entirety of this disclosure shows, by way of illustration, various embodiments in which the claimed invention may be practiced and provide for a superior process for a process for converting invertebrates into a feedstock(s). The advantages and features of the disclosure are of a representative sample of embodiments only, and are not exhaustive and/or exclusive. They are presented only to assist in understanding and teach the claimed features. It is to be understood that advantages, embodiments, examples, functions, features, structures, and/or other aspects of the disclosure are not to be considered limitations on the disclosure as defined by the claims.

## Claims

1. A process for converting invertebrates into an animal food or component of an animal food comprising:
(a) perforating and extracting the invertebrates to provide a solid invertebrate component and a liquid invertebrate component, wherein the solid invertebrate component typically comprises the chitinous exoskeletion of the invertebrate and any residual protein and/or oil that has not been extracted; and the liquid invertebrate component typically comprises haemolymph, oils and residual chitin;
(b) separating the solid invertebrate component from the liquid invertebrate component;
(c) optionally separating the liquid invertebrate component into lipid and non-lipid fractions;
(d) creating one or more growth media, wherein the growth media comprise or consist of the solid invertebrate component and, optionally, one or more additives; the liquid invertebrate component or a fraction thereof and, optionally, one or more additives; or the solid and liquid invertebrate component and, optionally, one or more additives;
(e) subjecting one or more of the growth media to microbial fermentation;
(f) inhibiting or terminating microbial fermentation;
wherein microbial fermentation is carried out as a two or more step process.

2. A process according to claim 1, further comprising a step of one or more of washing, culling and pasteurising the invertebrates prior to perforating and extracting the invertebrates.

3. A process according to claim 1 or claim 2, wherein microbial fermentation is carried out using one or more members of the bacteria, fungi and archea kingdoms.

4. A process according to any one of claims 1 to 3, wherein microbial fermentation is carried out using:
(a) one or more members of the Lactobacilliales, Bacilliales, Bifidobacteriales, Rhodospirillales, Saccharomycetales or Eurotiales orders; or
(b) one or more of Bacillus subtilis, Bacillus subtilis var. natto, Lactobacillus plantarum, Lactobacillus acidophilus, Lactobacillus helveticus, Lactobacillus casei, Streptococcus thermopilus, Bifidobacterium bifidum, Saccharomyces cerevisiae, Yarrowia lipolytica, Phaffia rhodozyma, Candida utilis or Aspergillus oryzae.

5. A process according to any one of claims 1 to 4, wherein the liquid invertebrate component is separated into lipid and non-lipid fractions.

6. A process according to any one of claims 1 to 5, wherein a growth medium comprising or consisting of the liquid invertebrate component and, optionally, one or more additives; or the non-lipid fraction of the liquid component and, optionally, one or more additives is subjected to a first fermentation step, followed by a second fermentation step.

7. A process according to any one of claims 1 to 5, wherein a first fermentation step is carried out using a growth medium comprising or consisting of the solid invertebrate component and, optionally, one or more additives; and a second fermentation step is carried out using a growth medium comprising or consisting of the liquid invertebrate component and, optionally, one or more additives or the non-lipid fraction of the liquid invertebrate component and, optionally, one or more additives.

8. A process according to any one of claims 1 to 7, wherein the fermentation mixture(s) is separated into lipid and non-lipid fractions.

9. A process according to any of claims 1-8 wherein one or more of the solid invertebrate component, the lipid fraction of the liquid invertebrate component, the fermented solid invertebrate component or the fermented lipid fraction of the liquid invertebrate component are removed from the process, preferably wherein the removed fermented solid invertebrate component is washed and filtered.

10. A process according to claim 9, wherein the filtrate is returned to the process for use as or addition to a growth medium for use in microbial fermentation.

11. A process according to any of claims 1-10, further comprising combining the first and second fermentation mixtures or one or more fractions thereof and subjecting the resultant mixture to one or more fermentation steps.

12. A process according to any of claims 1-11, wherein a final fermentation step is carried out using acid producing microbial species, preferably wherein the final fermentation step is carried out using Acetobacter or Lactobacillus species.

13. A process according to any one of claims 1 to 12, wherein one or more additives are added to the fermentation mixture prior to the second and/or each subsequent fermentation step.

14. A process according to any one of claims 1-13, wherein the invertebrates are larvae, prepupae or pupae, preferably wherein:
(a) the invertebrates are members of the Ectodysozoa or Lophotrochozoa superphyla; or
(b) the invertebrates are Hermetia illucens.

15. A composition obtained from the process according to any of claims 1-14.

## Patentansprüche

1. Verfahren zur Umwandlung von wirbellosen Tieren in ein Tierfutter oder eine Komponente eines Tierfutters, umfassend:
(a) Perforieren und Extrahieren der wirbellosen Tiere, um eine feste Komponente wirbelloser Tiere und eine flüssige Komponente wirbelloser Tiere bereitzustellen, wobei die feste Komponente wirbelloser Tiere typischerweise das Chitin-Exoskelett des wirbellosen Tiers und etwaige Protein- und/oder Ölrückstände umfasst, die nicht extrahiert wurden; und die flüssige Komponente wirbelloser Tiere typischerweise Hämolymphe, Öle und Chitinrückstände umfasst,
(b) Trennen der festen Komponente wirbelloser Tiere von der flüssigen Komponente wirbelloser Tiere,
(c) optionales Trennen der flüssigen Komponente wirbelloser Tiere in Lipid- und nicht-Lipidfraktionen;
(d) Herstellen eines oder mehrerer Wachstumsmedien, wobei die Wachstumsmedien die feste Komponente wirbelloser Tiere und optional ein oder mehrere Zusatzstoffe; die flüssige Komponente wirbelloser Tiere oder eine Fraktion davon und optional ein oder mehrere Zusatzstoffe; oder die feste und flüssige Komponente wirbelloser Tiere und optional ein oder mehrere Zusatzstoffe umfassen oder daraus bestehen;
(e) Unterziehen eines oder mehrerer der Wachstumsmedien einer mikrobiellen Fermentation;
(f) Hemmen oder Beenden der mikrobiellen Fermentation;
wobei die mikrobielle Fermentation als zwei- oder mehrstufiger Prozess ausgeführt wird.

2. Verfahren nach Anspruch 1, ferner umfassend einen oder mehrere Schritte des Waschens, Keulens und Pasteurisierens der wirbellosen Tiere vor dem Perforieren und Extrahieren der wirbellosen Tiere.

3. Verfahren nach Anspruch 1 oder Anspruch 2, wobei die mikrobielle Fermentation unter Verwendung eines oder mehrerer Vertreter des Bakterien-, Pilz- und Archaeenreichs ausgeführt wird.

4. Verfahren nach einem der Ansprüche 1 bis 3, wobei die mikrobielle Fermentation unter Verwendung von Folgendem ausgeführt wird:
(a) einem oder mehreren Vertretern der Ordnungen Lactobacilliales, Bacilliales, Bifidobacteriales, Rhodospirillales, Saccharomycetales oder Eurotiales; oder
(b) einem oder mehreren von Bacillus subtilis, Bacillus subtilis var. natto, Lactobacillus plantarum, Lactobacillus acidophilus, Lactobacillus helveticus, Lactobacillus casei, Streptococcus thermopilus, Bifidobacterium bifidum, Saccharomyces cerevisiae, Yarrowia lipolytica, Phaffia rhodozyma, Candida utilis oder Aspergillus oryzae.

5. Verfahren nach einem der Ansprüche 1 bis 4, wobei die flüssige Komponente wirbelloser Tiere in Lipid- und nicht-Lipidfraktionen getrennt wird.

6. Verfahren nach einem der Ansprüche 1 bis 5, wobei ein Wachstumsmedium, das die flüssige Komponente wirbelloser Tiere und optional ein oder mehrere Zusatzstoffe; oder die nicht-Lipidfraktion der flüssigen Komponente und optional ein oder mehrere Zusatzstoffe umfasst oder daraus besteht, einem ersten Fermentationsschritt unterzogen wird, gefolgt von einem zweiten Fermentationsschritt.

7. Verfahren nach einem der Ansprüche 1 bis 5, wobei ein erster Fermentationsschritt unter Verwendung eines Wachstumsmediums ausgeführt wird, das die feste Komponente wirbelloser Tiere und optional ein oder mehrere Zusatzstoffe umfasst oder daraus besteht, und ein zweiter Fermentationsschritt unter Verwendung eines Wachstumsmediums ausgeführt wird, das die flüssige Komponente wirbelloser Tiere und optional ein oder mehrere Zusatzstoffe oder die nicht-Lipidfraktion der flüssigen Komponente wirbelloser Tiere und optional ein oder mehrere Zusatzstoffe umfasst oder daraus besteht.

8. Verfahren nach einem der Ansprüche 1 bis 7, wobei die Fermentationsmischung(en) in Lipid- und nicht-Lipidfraktionen getrennt wird/werden.

9. Verfahren nach einem der Ansprüche 1-8, wobei ein oder mehrere von der festen Komponente wirbelloser Tieren, der Lipidfraktion der flüssigen Komponente wirbelloser Tiere, der fermentierten festen Komponente wirbelloser Tiere oder der fermentierten Lipidfraktion der flüssigen Komponente wirbelloser Tiere aus dem Verfahren entfernt werden, wobei die entfernte fermentierte feste Komponente wirbelloser Tiere vorzugsweise gewaschen und gefiltert wird.

10. Verfahren nach Anspruch 9, wobei das Filtrat zu dem Verfahren zurückgeführt wird, um als Wachstumsmedium zur Verwendung bei der mikrobiellen Fermentation verwendet zu werden oder diesem beigefügt zu werden.

11. Verfahren nach einem der Ansprüche 1-10, ferner umfassend Kombinieren der ersten und zweiten Fermentationsmischung oder einer oder mehrerer Fraktionen davon und Unterziehen der resultierenden Mischung einem oder mehreren Fermentationsschritten.

12. Verfahren nach einem der Ansprüche 1-11, wobei ein letzter Fermentationsschritt unter Verwendung säureproduzierender mikrobieller Spezies ausgeführt wird, wobei der letzte Fermentationsschritt vorzugsweise unter Verwendung von Acetobacter- oder Lactobacillus-Spezies ausgeführt wird.

13. Verfahren nach einem der Ansprüche 1 bis 12, wobei der Fermentationsmischung vor dem zweiten und/oder jedem nachfolgenden Fermentationsschritt ein oder mehrere Zusatzstoffe zugesetzt werden.

14. Verfahren nach einem der Ansprüche 1-13, wobei es sich bei den wirbellosen Tieren um Larven, Präpuppen oder Puppen handelt, wobei vorzugsweise Folgendes gilt:
(a) die wirbellosen Tiere sind Vertreter der Stammgruppe Ectodysozoa oder Lophotrochozoa; oder
(b) bei den wirbellosen Tieren handelt es sich um Hermetia illucens.

15. Zusammensetzung, die durch das Verfahren nach einem der Ansprüche 1-14 erhalten wird.

## Revendications

1. Procédé permettant la conversion des invertébrés en un aliment pour animaux ou un composant d'un aliment pour animaux comprenant :
(a) la perforation et l'extraction des invertébrés pour fournir un composant invertébré solide et un composant invertébré liquide, ledit composant invertébré solide comprenant généralement l'exosquelette chitineux de l'invertébré et une quelconque protéine et/ou huile résiduelle qui n'a pas été extraite ; et ledit composant invertébré liquide comprenant généralement de l'hémolymphe, des huiles et de la chitine résiduelle ;
(b) la séparation du composant invertébré solide du composant invertébré liquide ;
(c) éventuellement la séparation du composant invertébré liquide en fractions lipidiques et non lipidiques ;
(d) la création d'un ou de plusieurs milieux de croissance, lesdits milieux de croissance comprenant ou étant constitués du composant invertébré solide et, éventuellement, d'un ou de plusieurs additifs ; du composant invertébré liquide ou d'une fraction de celui-ci et, éventuellement, d'un ou de plusieurs additifs ; ou du composant invertébré solide et liquide et, éventuellement, d'un ou de plusieurs additifs ;
(e) la soumission d'un ou de plusieurs des milieux de croissance à une fermentation microbienne ;
(f) l'inhibition ou la terminaison de la fermentation microbienne ;
ladite fermentation microbienne étant effectuée sous la forme d'un processus en deux étapes ou plus.

2. Procédé selon la revendication 1, comprenant en outre une étape constituée d'un ou de plusieurs parmi le lavage, l'abattage et la pasteurisation des invertébrés avant la perforation et l'extraction des invertébrés.

3. Procédé selon la revendication 1 ou la revendication 2, ladite fermentation microbienne étant effectuée en utilisant un ou plusieurs membres des règnes des bactéries, des champignons et des archées.

4. Procédé selon l'une quelconque des revendications 1 à 3, ladite fermentation microbienne étant effectuée en utilisant :
(a) un ou plusieurs membres des ordres Lactobacilliales, Bacilliales, Bifidobacteriales, Rhodospirillales, Saccharomycetales ou Eurotiales ; ou
(b) un ou plusieurs Bacillus subtilis, Bacillus subtilis var. natto, Lactobacillus plantarum, Lactobacillus acidophilus, Lactobacillus helveticus, Lactobacillus casei, Streptococcus thermopilus, Bifidobacterium bifidum, Saccharomyces cerevisiae, Yarrowia lipolytica, Phaffia rhodozyma, Candida utilis ou Aspergillus oryzae.

5. Procédé selon l'une quelconque des revendications 1 à 4, ledit composant invertébré liquide étant séparé en fractions lipidiques et non lipidiques.

6. Procédé selon l'une quelconque des revendications 1 à 5, un milieu de croissance comprenant ou constitué du composant invertébré liquide et, éventuellement, un ou plusieurs additifs ; ou la fraction non lipidique du composant liquide et, éventuellement, un ou plusieurs additifs étant soumis à une première étape de fermentation, suivie d'une seconde étape de fermentation.

7. Procédé selon l'une quelconque des revendications 1 à 5, une première étape de fermentation étant effectuée à l'aide d'un milieu de croissance comprenant ou constitué du composant invertébré solide et, éventuellement, d'un ou de plusieurs additifs ; et une seconde étape de fermentation étant effectuée à l'aide d'un milieu de croissance comprenant ou constitué du composant invertébré liquide et, éventuellement, d'un ou plusieurs additifs ou de la fraction non lipidique du composant invertébré liquide et, éventuellement, d'un ou de plusieurs additifs.

8. Procédé selon l'une quelconque des revendications 1 à 7, ledit ou lesdits mélanges de fermentation étant séparés en fractions lipidiques et non lipidiques.

9. Procédé selon l'une quelconque des revendications 1-8, l'un ou plusieurs du composant invertébré solide, de la fraction lipidique du composant invertébré liquide, du composant invertébré solide fermenté ou de la fraction lipidique fermentée du composant invertébré liquide étant retirés du processus, de préférence, ledit composant invertébré solide fermenté retiré étant lavé et filtré.

10. Procédé selon la revendication 9, ledit filtrat étant renvoyé au processus destiné à être utilisé en tant que milieu de croissance, ou ajouté à celui-ci, destiné à être utilisé dans la fermentation microbienne.

11. Procédé selon l'une quelconque des revendications 1-10, comprenant en outre la combinaison des premier et second mélanges de fermentation ou d'une ou plusieurs fractions de ceux-ci et la soumission du mélange résultant à une ou plusieurs étapes de fermentation.

12. Procédé selon l'une quelconque des revendications 1-11, une étape de fermentation finale étant effectuée à l'aide des espèces microbiennes produisant de l'acide, de préférence ladite étape de fermentation finale étant effectuée à l'aide des espèces Acetobacter ou Lactobacillus.

13. Procédé selon l'une quelconque des revendications 1 à 12, un ou plusieurs additifs étant ajoutés au mélange de fermentation avant la seconde et/ou chaque étape de fermentation ultérieure.

14. Procédé selon l'une quelconque des revendications 1-13, lesdits invertébrés étant des larves, des prépupes ou des pupes, de préférence :
(a) les invertébrés étant des membres des superphyla Ectodysozoa ou Lophotrochozoa ; ou
(b) les invertébrés sont Hermetia illucens.

15. Composition obtenue à partir du procédé selon l'une quelconque des revendications 1-14.
